(19) Europäisches Patentamt / European Patent Office / Office européen des brevets

(11) **EP 2 378 381 B1**

(12) **EUROPÄISCHE PATENTSCHRIFT**

(45) Veröffentlichungstag und Bekanntmachung des Hinweises auf die Patenterteilung:
**11.09.2013 Patentblatt 2013/37**

(51) Int Cl.:
***G05B 19/404*** *(2006.01)*

(21) Anmeldenummer: **11159212.7**

(22) Anmeldetag: **22.03.2011**

(54) **Verfahren und Vorrichtung zum Kompensieren einer temperaturabhängigen Lageveränderung an einer Werkzeugmaschine**

Method and device for compensating for temperature-dependent positioning changes on a machine tool

Procédé et dispositif de compensation d'une modification de position en fonction de la température sur une machine-outil

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.03.2010 DE 102010003303**

(43) Veröffentlichungstag der Anmeldung:
**19.10.2011 Patentblatt 2011/42**

(73) Patentinhaber: **Deckel Maho Seebach GmbH 99846 Seebach (DE)**

(72) Erfinder:
• **Tüllmann, Udo**
  **99817 Eisenach (DE)**
• **Zenker, Christof**
  **83607 Holzkirchen (DE)**

(74) Vertreter: **MERH-IP**
  **Matias Erny Reichl Hoffmann**
  **Paul-Heyse-Strasse 29**
  **80336 München (DE)**

(56) Entgegenhaltungen:
EP-A1- 0 625 739     DE-A1- 10 312 025
DE-A1-102007 045 592     US-A1- 2006 218 811

• Jie Zhu: "ROBUST THERMAL ERROR MODELING AND COMPENSATION FOR CNC MACHINE TOOLS", , 1. Januar 2008 (2008-01-01), XP55033155, Gefunden im Internet: URL:http://deepblue.lib.umich.edu/bitstrea m/2027.42/60857/1/zhujie_1.pdf [gefunden am 2012-07-18]

• P. Schellekens ET AL: "Development of methods for the numerical error correction of machine tools", , 1. Januar 1993 (1993-01-01), Seiten 1-191, XP55033157, Gefunden im Internet: URL:http://bookshop.europa.eu/en/developme nt-of-methods-for-the-numerical-error-corr ection-of-machine-tools-final-project-repo rt-pbEUNA15377/downloads/EU-NA-15377-EN-C/ EUNA15377ENC_001.pdf; pgid=y8dIS7GUWMdSR0EA IMEUUsWb0000uxukXFGX; sid=NNADksyvcaoDk4N_Q 9mdNa6KebMd4G5sSIA=? FileName=EUNA15377ENC_ 001.pdf&SK [gefunden am 2012-07-18]

• YANG S ET AL: "Accuracy Enhancement of a Horizontal Machining Center by Real-Time Error Compensation", JOURNAL OF MANUFACTURING SYSTEMS, SOCIETY OF MANUFACTURING ENGINEERS, DEARBORN, MI, US, Bd. 15, Nr. 2, 1. Januar 1996 (1996-01-01) , Seiten 113-124, XP004021808, ISSN: 0278-6125

• CHEN J S ET AL: "REAL-TIME COMPENSATION FOR TIME-VARIANT VOLUMETRIC ERRORS ON A MACHINING CENTER", TRANSACTIONS OF THE AMERICAN SOCIETY OF MECHANICAL ENGINEERS,SERIES B: JOURNAL OF ENGINEERING FOR INDUSTRY, ASME. NEW YORK, US, Bd. 115, Nr. 4, 1. November 1993 (1993-11-01), Seiten 472-479, XP000423911, ISSN: 0022-0817

**Beschreibung**

Die vorliegende Erfindung betrifft ein Verfahren und eine Vorrichtung zum Kompensieren einer temperaturabhängigen Lageveränderung an einer Werkzeugmaschine mit zumindest einer Linearachse. Gemäß der vorliegenden Erfindung wird zumindest ein Temperaturwert an einer Temperaturmessposition der Linearachse der Werkzeugmaschine erfasst, ein Temperaturdifferenzwert zwischen einer Bezugstemperatur und dem erfassten Temperaturwert ermittelt, ein Kompensationswert in Abhängigkeit des Temperaturdifferenzwerts bestimmt, und eine temperaturabhängige Lageveränderung, z.B. eine temperaturabhängige Verlagerung eines an der Werkzeugmaschine eingespannten Werkzeugs oder Werkstücks oder eines Bauteils der Werkzeugmaschine bzw. einer Linearachse der Werkzeugmaschine, in Abhängigkeit des bestimmten Kompensationswerts bei Steuerung der Werkzeugmaschine kompensiert.

Weiterhin betriff die vorliegende Erfindung ein System mit einer Werkzeugmaschine, insbesondere einer NC- bzw. CNC-Werkzeugmaschine, mit zumindest einer Linearachse und einer Vorrichtung zum Kompensieren einer temperaturabhängigen Lageveränderung an der Werkzeugmaschine.

HINTERGRUND DER ERFINDUNG

Die vorliegende Erfindung betrifft das Ausgleichen von thermischen Verlagerungen an einer Werkzeugmaschine durch eine Kompensation mittels einer Berechnung von Kompensationswerten, die für eine numerische bzw. programmgesteuerte Steuerung der Werkzeugmaschine zur Kompensation der thermischen Verlagerungen berechnet werden.

Thermische Verlagerungen an der Werkzeugmaschine sind hierbei z.B. Folge von Verbiegungen von Bauteilen, z. B. Gestellbauteilen, wobei derartige Verbiegungen durch Erwärmung und insbesondere durch inhomogene Erwärmung der Bauteile entstehen können, z. B. durch Wärmeinbringung von einseitig angebrachten Führungs- und Antriebselementen. Wird ein Gestellbauteil durch Führungen und Antriebe einseitig erwärmt, dehnt sich das Material auf dieser erwärmten Seite entsprechend der einseitigen Erwärmung. Aufgrund der einseitigen Erwärmung hat das Gestellbauteil auf der erwärmten Seite eine größere Länge als auf der entgegengesetzten Seite, wodurch sich das Bauteil verbiegt. Ein derartiges Verhalten führt zu einem Positionsfehler, der durch Kompensation bei der Steuerung der Werkzeugmaschine bzw. der Achsen einer Werkzeugmaschine kompensiert werden soll.

Die vorstehend beschriebenen Verformungen von Bauteilen der Werkzeugmaschine werden im Allgemeinen als Wärmegang der Werkzeugmaschine bezeichnet. Werkzeugmaschinen weisen hierbei aufgrund des thermischen Ausdehnungskoeffizienten, diesen Wärmegang auf. Der Wärmegang ergibt sich zum einen durch lineare thermische Dehnung z. B. eines Schlittens oder eines Maschinenbettes der Werkzeugmaschine. Dieser Anteil der linearen thermischen Dehnung ergibt sich aus einer homogenen Temperaturerhöhung des Bauteils multipliziert mit dem Wärmeausdehnungskoeffizienten.

Ein zweiter Anteil des Wärmegangs ergibt sich jedoch über inhomogene Temperaturdifferenzen, die an Bauteilen der Werkzeugmaschine entstehen können. Ursache solcher Temperaturdifferenzen kann z. B. eine ungleichmäßige Wärmeeinbringung in die Bauteile der Werkzeugmaschine sein. Sind z. B. an einem Bauteil der Werkzeugmaschine die Antriebe und die Führungen an der Unterseite angebracht, so wird diese Unterseite stärker und schneller erwärmt als die Oberseite des Bauteils, z. B. eines Schlittens einer Linearachse der Werkzeugmaschine. Somit ergibt sich häufig die Situation, dass ein Gestellbauteil einer Werkzeugmaschine eine warme bzw. sich schnell erwärmende Seite aufweist, auf der Führungen und Antriebe platziert sind, und eine kältere bzw. sich langsamer und weniger stark erwärmende Seite. Eine derartige einseitige Wärmung führt zu einer Verbiegung des Bauteils, das einer derartigen inhomogenen Erwärmung ausgesetzt ist.

Es ist dem Stand der Technik im Hinblick auf die vorstehend beschriebenen thermischen bedingten Verlagerungen an einer Werkzeugmaschine bekannt, durch aktive Temperierung der Werkzeugmaschine und ihrer Bauteile die thermisch bedingten Verlagerungen zu reduzieren bzw. zu vermeiden. So kann mittels einer Kältemaschine ein Medium, das auf eine vorbestimmte oder eine entsprechend einer Führungsgröße geführten Temperatur gebracht wird, zur lokalen Temperierung einiger oder aller der Bauteile der Werkzeugmaschinen genutzt werden, insbesondere z. B. zum Kühlen der Zentren der Wärmeproduktion an einer Werkzeugmaschine, wie z. B. Spindeln oder Antriebe.

Ein derartiger Ansatz mittels aktiver Temperierung bzw. Kühlung einiger oder aller Teile einer Werkzeugmaschine kann hierbei effektiv verwendet werden, um die beschriebenen Längenänderungen von Bauteilen bei homogener Erwärmung zu reduzieren bzw. zu vermeiden. Jedoch kann durch die lokal begrenzte Einbringung des Kühlmittels die Entstehung von Temperaturdifferenzen nicht gänzlich verhindert werden, bzw. wird teilweise sogar noch verstärkt, so dass die thermisch bedingten Verformungen, die auf Verbiegungen der Gestellbauteile in Folge von Temperaturdifferenzen auf unterschiedlichen Seiten der Bauteile der Werkzeugmaschine zurückzuführen sind, mit aktiver Temperierung der Werkzeugmaschine nicht gänzlich verhindert werden können, bzw. sogar noch verstärkt werden.

Es ist dem Stand der Technik hierbei bekannt, thermisch bedingte Verlagerungen an einer Werkzeugmaschine durch Messung einer oder mehrerer Temperaturen an Bauteilen der Werkzeugmaschine und durch die Berechnung eines zur gemessenen Temperatur korrelativen Kompensationswerts in der Maschinensteuerung durch Überlagerung der Achs-Sollposition zu kompensieren. Hierbei ist es dem Stand der Technik bekannt, eine steuerungstechnische Kompensation durchzuführen, wobei Kompensationswerte in Abhängigkeit von der oder den gemessenen Temperaturen bzw. Temperaturdifferenzen an Bauteilen der Werkzeugmaschine berechnet werden.

Dies kann z. B. mit folgendem formelmäßigem Ansatz durchgeführt werden:

$$\Delta A1 = (T_{BEZUG\_11} - T_{BASIS\_11}) \cdot K\_11 + (T_{BEZUG\_12} - T_{BASIS\_12}) \cdot K\_12 + ... +$$
$$+ (T_{BEZUG\_1N} - T_{BASIS\_1N}) \cdot K\_1N \qquad (1)$$

$$\Delta AN = (T_{BEZUG\_N1} - T_{BASIS\_N1}) \cdot K\_N1 + (T_{BEZUG\_N2} - T_{BASIS\_N2}) \cdot K\_N2 + ... +$$
$$+ (T_{BEZUG\_NN} - T_{BASIS\_NN}) \cdot K\_NN \qquad (2)$$

Hierbei ist $\Delta A1$ ein Korrekturwert bzw. Kompensationswert für eine erste Achse A1 der Werkzeugmaschine, und $\Delta AN$ ein Kompensationswert für eine N-te Achse AN der Werkzeugmaschine. An einem Bauteil der Achse A1 der Werkzeugmaschine werden eine Bezugstemperatur und eine Basistemperatur $T_{BEZUG\_11}$ und $T_{BASIS\_11}$ erfasst und eine entsprechende Temperaturdifferenz gebildet. Weiterhin werden an anderen Achsen der Werkzeugmaschine A1 bis AN jeweils eine Bezugstemperatur und eine Basistemperatur erfasst und ein entsprechender Temperaturdifferenzwert ermittelt.

Für jede der Achsen, insbesondere Linearachsen, der Werkzeugmaschine wird hierbei ein Kompensationskorrekturwert errechnet, der die Temperaturdifferenzen berücksichtigt, jeweils multipliziert mit einem Kompensationsfaktor. Hierbei sind K_11 bis K_1N und K_N1 bis K_NN die jeweiligen Kompensationsfaktoren, die den jeweiligen Temperaturdifferenzen vorangestellt werden. Diese können durch Simulation bzw. durch Experimente an der Werkzeugmaschine bestimmt werden, um ein zufriedenstellendes Kompensationsergebnis erreichen zu können.

Hierbei werden bevorzugt die in der Maschinensteuerung einer NC-Werkzeugmaschine bzw. CNC-Werkzeugmaschine vorgegebenen Soll-Achspositionen der jeweiligen Achsen der Werkzeugmaschine mit den errechneten Kompensationskorrekturwerten $\Delta A1$ bzw. $\Delta AN$ überlagert bzw. korrigiert. Z. B. könnte die Soll-Achsposition der Achse A1 um den errechneten Wert $\Delta A1$ korrigiert werden, um die thermische Verlagerung in Richtung der Achse A1 zu kompensieren.

Ähnliche Verfahren zum Kompensieren von temperaturabhängigen Lageveränderungen an einer Werkzeugmaschine sind z. B. aus der DE 198 00 033 A1 oder der DE 10 2004 044838 A1 bekannt.

Jedoch sind derartige Verfahren zum Kompensieren von temperaturabhängigen Lageveränderungen an einer Werkzeugmaschine unpräzise. Zudem wird seit langer Zeit versucht, die Haupt- und Nebenzeiten (und damit die Stückkosten) einer spanenden Bearbeitung an einer Werkzeugmaschine immer weiter zu senken, indem die Dynamik der Maschinenachsen gesteigert wird, so dass aufgrund dessen die thermisch bedingten Abweichungen mit jeder Maschinengeneration mit erhöhter Dynamik zunehmen. Insbesondere werden thermisch Verlagerungen an einer Werkzeugmaschine somit von Generation zu Generation von Werkzeugmaschinen relevanter, da die beschriebenen thermisch bedingten Verlagerungen mit der Dynamik der Werkzeugmaschine zunehmen, insbesondere da die Reibung in den Antriebs- und Führungselementen und die daraus folgende Erwärmung mit der Beschleunigung und vor allem der maximalen Geschwindigkeit zunehmen.

Des Weiteren besitzen Werkzeugmaschinen im Allgemeinen mehrere, seriell aufeinander aufbauende Achsen. Das bedeutet, dass sich die thermischen Verlagerungen der einzelnen Achsen zum Werkzeug oder Werkstück aufaddieren und die thermoelastischen Verlagerungen, die am Werkzeug bzw. Werkstück wirksam werden, sich in Abhängigkeit aller seriell aufeinander aufbauenden Achsen ergeben. Dies potenziert die auftretenden Positionsfehler.

Insbesondere kann durch thermische Verbiegungen bzw. thermische Verformungen eine Positionsabweichung nicht nur in Vorschubrichtung (wie bei der reinen Längendehnung) einer Linearachse auftreten, sondern weiterhin eine Positionsabweichung senkrecht zur Vorschubrichtung. Insbesondere bei Maschinen mit großen Auskragungen, d. h. Verfahrwegen, ergeben sich durch diese beschriebenen Effekte große Wärmegänge, die einen großen Teil der Ungenauigkeiten ausmachen, die am Werkstück zurückbleiben. Insbesondere führen inhomogene Erwärmungen und darauf zurückzuführende Verbiegungen von Bauteilen bei gleichem, einseitig eingebrachten, Temperaturhub zu deutlich größeren thermischen Verlagerungen (insbesondere in einer anderen Raumrichtung) als die lineare Wärmedehnung bei homogener Erwärmung.

Die Erfinder der vorliegenden Erfindung haben hierbei Messungen durchgeführt, wobei herausgefunden wurde, dass die Anteile an der Abweichung an einer Werkzeugspitze normiert auf den Arbeitsweg der Maschine zwar lediglich in einem Bereich von -0,15 bis 0,3 Promille liegen, dies aber bereits bei einem Arbeitsweg von 500 mm immerhin ca. -100 bis 150 $\mu$m ausmacht, wobei diese Werte bei den heutigen Anforderungen der Bearbeitungsgenauigkeit von Werkstücken an einer Werkzeugmaschine nicht genügen und reduziert bzw. kompensiert werden müssen.

Des Weiteren werden Verfahren zum bestimmen einer temperaturabhängigen Kompensation von Lageveränderungen, teilweise unter Berücksichtigung von einer Achsposition, in den folgenden Dokumenten beschrieben: Artikel "Robust Thermal Error Modeling and Compensation for CNC Machine Tools" von Jie Zhu (2008- 01- 01; XP55033155) , Artikel "Development of methods for numerical error correction of machine tools" von P. Schellekens et al. (1993- 01- 01; XP55033157) ; Artikel "Accuracy Enhancement of a Horizontal Machining Center by Real- Time Error compensation" von S. Yang et al. (1996- 01- 01; XP004021808) , Artikel "Real- Time Compensation for Time- Variant Volumetric Errors on a Machining Center" von J. S. Chen et al. (1993- 11- 01; Transactions of the American Society of Mechanical Engineers, Series B: Journal of Engineering for Industry, ASME, New York, US, Bd. 115, Nr. 4, ISSN: 0022-0817) , US 2006/218811 A1, EP 0 625 739 A1, DE 103 12 025 A1 und DE 10 2007 045592 A1. Aus den Dokumenten scheinen Verfahren zum Kompensieren einer temperaturabhängigen Lageveränderung an einer Werkzeugmaschine mit zumindest einer ersten Linearachse bekannt, umfassend: Erfassen mehrerer Temperaturwerte, Ermitteln von Temperaturdifferenzen der Temperaturwerte, Bestimmen eines Kompensationswerts in Abhängigkeit der Temperaturdifferenzen, und Kompensieren einer temperaturabhängigen Lageveränderung in Abhängigkeit des Kompensationswerts, wobei der Kompensationswert zudem in Abhängigkeit einer Achsposition einer Linearachse bestimmt wird.

## ZUSAMMENFASSUNG DER ERFINDUNG

Im Hinblick auf die vorstehend beschriebenen Nachteile der aus dem Stand der Technik bekannten Verfahren zum Kompensieren von temperaturabhängigen Lageveränderungen an einer Werkzeugmaschine ist es eine Aufgabe der vorliegenden Erfindung, die Nachteile des Stands der Technik zu vermeiden und ein verbessertes Verfahren zum Kompensieren von temperaturabhängigen Lageveränderungen an einer Werkzeugmaschine bereitzustellen, mit der die Kompensation der thermisch Verlagerungen effizienter und genauer bewerkstelligt werden kann.

Die vorstehend beschriebenen Aufgaben der vorliegenden Erfindung werden erfindungsgemäß wie in den unabhängigen Ansprüchen beschrieben gelöst.. Merkmale bevorzugter Ausführungsformen der vorliegenden Erfindung werden in den abhängigen Ansprüchen beschrieben.

Ein Verfahren zum Kompensieren einer temperaturabhängigen Lageveränderung an einer Werkzeugmaschine mit zumindest einer ersten Linearachse umfasst die Schritte Erfassen zumindest einer ersten Temperatur an einer ersten Temperaturmessposition der ersten Linearachse der Werkzeugmaschine, Ermitteln einer ersten Temperaturdifferenz zwischen einer ersten Bezugstemperatur und der ersten Temperatur, Bestimmen eines ersten Kompensationswerts in Abhängigkeit der ersten Temperaturdifferenz, und Kompensieren einer temperaturabhängigen Lageveränderung in Abhängigkeit des ersten Kompensationswerts. Erfindungsgemäß wird hierbei der erste Kompensationswert weiterhin in Abhängigkeit einer Achsposition der ersten Linearachse bestimmt. Es wird also erfindungsgemäß im Schritt Bestimmen eines ersten Kompensationswerts der erste Kompensationswert in Abhängigkeit der ersten Temperaturdifferenz sowie in Abhängigkeit der Achsposition der ersten Linearachse bestimmt.

Somit wird erfindungsgemäß die Kompensation einer temperaturabhängigen Lageveränderung zusätzlich in Abhängigkeit einer Achsposition einer Linearachse der Werkzeugmaschine durchgeführt. Im Gegensatz zum Stand der Technik geht hierbei also die Position zumindest einer oder ggf. mehrerer Achsen der Werkzeugmaschine in die Berechnung von Kompensationswerten zum Kompensieren der temperaturabhängigen Lageveränderungen an der Werkzeugmaschine ein. Dies hat insbesondere den Vorteil, dass auch die positionsabhängigen thermischen Verlagerungen der einzelnen Achsen, die sich aufaddieren, positionsabhängig kompensiert werden können, d. h. angepasst an die tatsächliche momentane Position der Achse angepasst kompensiert werden können.

Hierbei wurde von den Erfindern insbesondere erkannt, dass die thermischen Lageveränderungen an einer Werkzeugmaschine, die durch inhomogene Wärmeeinbringung entstehen können und Verbiegungen von Bauteilen zur Folge haben, einen Positionsfehler erzeugen, der sowohl einen positionsunabhängigen als auch einen positionsabhängigen Anteil aufweist, wobei der positionsabhängige Positionsfehler bei den aus dem Stand der Technik bekannten Kompensationsverfahren nicht berücksichtig werden kann.

Gemäß der vorliegenden Erfindung, die eine positionsabhängige Kompensation von thermischen Verlagerungen vorsieht, kann die thermische Verlagerung jedoch vorteilhaft in Abhängigkeit der Achspositionen bei jeder Achsposition genau kompensiert werden. Es wird somit vorgeschlagen, einen Kompensationswert bzw. mehrere Kompensationswerte nicht nur in Abhängigkeit von einer oder mehreren gemessenen Temperaturen bzw. Temperaturdifferenzen wie im Stand der Technik zu berechnen, sondern zusätzlich in Abhängigkeit von einer oder mehreren Achspositionen der Achsen bzw. Linearachsen der Werkzeugmaschine, die die Position von Werkzeug und/oder Werkstück beeinflussen. Die Achsposition der einen oder mehreren Achsen kann hierbei dazu genutzt werden, einen positionsabhängigen Anteil des Positionsfehlers durch einen entsprechend berechneten Kompensationswert auszugleichen bzw. genauer auszugleichen als in den dem Stand der Technik bekannten Kompensationsverfahren.

Vorzugsweise wird hierbei dieser positionsabhängige Anteil auch für Richtungen senkrecht zur der Bewegungsrichtung der Linearachse, an der die Temperaturdifferenz ermittelt wurde, bestimmt. Vorzugsweise wird für Werkzeugmaschinen mit serieller Kinematik, bei denen mehrere Achsen seriell aufeinander aufbauen, die Achsposition aller seriell aufbauenden Achsen mit einbezogen. Die jeweiligen Achspositionen der Achsen der Werkzeugmaschine können aus einer Kontrolleinheit der Werkzeugmaschine, z. B. der sogenannten Werkzeugmaschinen-NC, ausgelesen werden und in Abhängigkeit der Achsposition der einen oder mehreren Achsen der Werkzeugmaschine ein oder mehrere achspositionsabhängige Kompensationswerte errechnet werden, die dann in den Regelkreis der Werkzeugmaschine eingeschleust werden können, z. B. um Achs-Sollpositionen der jeweiligen Achsen zu korrigieren bzw. entsprechend der berechneten einen oder mehr Kompensationswerte zu überlagern, um die thermischen Verlagerungen der Bauteile der Werkzeugmaschine bzw. der Achsen der Werkzeugmaschine zu kompensieren. Die Kompensationswerte können hierbei z. B. in der Maschinen-NC oder der Maschinen-PLC errechnet werden. Vorzugsweise werden hierbei die Positionen aller Achsen der Werkzeugmaschine berücksichtigt, die in einer kinematischen Kette zur Position von Werkzeug oder Werkstück beitragen.

Weiterhin werden Kompensationswerte vorzugsweise für mehrere, besonders vorzugsweise für alle drei Raumrichtungen bestimmt. Gemäß der vorliegenden Erfindung ist es möglich, dass eine temperaturabhängige Verlagerung an der Werkzeugmaschine verbessert kompensiert wird als bei Errechnung von Kompensationswerten ohne Berücksichtigung der Achsposition der Achsen der Werkzeugmaschine, da erfindungsgemäß auch positionsabhängige thermische Verlagerungen kompensatorisch berücksichtigt werden können, wodurch eine stark verbesserte Thermo-Kompensation erreicht werden kann. Der Wärmegang der Werkzeugmaschine insbesondere einschließlich dem Wärmegang aufgrund von inhomogen eingebrachten Erwärmungen und daraus resultierenden Verformungen bzw. Verbiegungen von Bauteilen kann erfolgreich und verbessert kompensiert werden.

Zusammenfassend wird erfindungsgemäß eine thermisch bedingte Verlagerung der Maschinenachsen durch einen korrelativen Ansatz kompensiert, bei dem ein oder mehrere Kompensationswerte nicht nur in Abhängigkeit von einer oder mehreren gemessenen Temperaturen bzw. ermittelten Temperaturdifferenzen, sondern auch in Abhängigkeit von einer oder mehreren Achspositionen der Achsen der Werkzeugmaschine bestimmt werden, die die Position von Werkzeug und/oder Werkstück beeinflussen.

Vorzugsweise umfasst der erste Kompensationswert einen positionsunabhängigen Anteil und einen positionsabhängigen Anteil, wobei der positionsabhängige Anteil des ersten Kompensationswerts vorzugsweise zumindest von der Achsposition der ersten Linearachse abhängt. Dies hat den Vorteil, dass sowohl ein achspositionsunabhängiger als auch ein achspositionsabhängiger Positionsfehler durch einen entsprechenden positionsunabhängigen und einen positionsabhängigen Anteil korrigiert bzw. kompensiert werden kann. Positionsunabhängige Anteile können hierbei z. B. aus einer linearen Dehnung bei gleichmäßiger Erwärmung eines Bauteils im Vergleich zu einer Vergleichstemperatur entstehen.

In einer erfindungsgemäßen Alternative wird der erste Kompensationswert in Abhängigkeit des Verhältnisses von Achsposition der ersten Linearachse zu Achslänge der ersten Linearachse bestimmt. Um eine noch höhere Präzision bei dem Kompensieren einer temperaturabhängigen Lageveränderung erreichen zu können, kann der erste Kompensationswert alternativ in Abhängigkeit des Quadrats des Verhältnisses von Achsposition der ersten Linearachse zu Achslänge der ersten Linearachse bestimmt werden. Somit können der oder die positionsabhängigen Anteile eines oder mehrerer Kompensationswerte in Abhängigkeit eines einfachen Verhältnisses von Achsposition einer Linearachse zu Achslänge einer Linearachse bestimmt werden, also durch einen einfach handzuhabenden dimensionslosen Parameter. Da die Biegung eines Bauteils im Wesentlichen bogenförmig auftritt, wenn ein Bauteil auf einer Seite eine andere Temperatur als auf einer anderen Seite des Bauteils aufweist, ist der Positionsfehler, der von der Achsposition abhängt, im Wesentlichen nicht linear, so dass ein noch besseres Kompensationsergebnis erzielt werden kann, wenn ein Kompensationswert nicht in Abhängigkeit des Verhältnisses von Achsposition zu Achslänge einer Linearachse bestimmt wird, sondern vielmehr in Abhängigkeit des Quadrats des Verhältnisses von Achsposition zu Achslänge der Linearachse. Da jedoch die Verbiegungen noch im Bereich der linearen Näherung liegen, ist bereits das einfache Anwenden des Verhältnisses von Achsposition zu Achslänge einer Linearachse eine gute Näherung und ermöglicht bereits eine hervorragende positionsabhängige Kompensation von temperaturabhängigen Verlagerungen an der Werkzeugmaschine.

Vorzugsweise wird im Schritt Kompensieren einer temperaturabhängigen Lageveränderung in Abhängigkeit des ersten Kompensationswerts eine temperaturabhängige Lageveränderung in einer Richtung senkrecht zu der Richtung der ersten Linearachse kompensiert. Bei auf Verbiegungen zurückzuführenden thermischen Verformungen bzw. Verlagerungen, die aufgrund von inhomogenen Erwärmungen von Bauteilen der Werkzeugmaschine entstehen, ist es eine weitere Besonderheit, dass eine Positionsabweichung nicht in Vorschubrichtung, sondern senkrecht zur Vorschubrichtung bewirkt wird, d. h. anders als bei einer reinen Längendehnung in Vorschubrichtung einer Linearachse. Somit wird hierbei der Vorteil erzielt, dass die auf Verbiegung zurückzuführenden thermischen Verlagerungen in einer Richtung senkrecht zu der Richtung einer Linearachse ebenfalls vorteilhaft und präzise kompensiert werden können.

Vorzugsweise wird im Schritt Kompensieren einer temperaturabhängigen Lageveränderung in Abhängigkeit

EP 2 378 381 B1

des ersten Kompensationswerts eine temperaturabhängige Lageveränderung in einer Richtung einer zweiten Linearachse der Werkzeugmaschine kompensiert, wobei die zweite Linearachse vorzugsweise senkrecht zu der ersten Linearachse angeordnet ist. Dies ermöglicht es vorteilhaft, thermische Verlagerungen, die durch inhomogene Erwärmung eines oder mehrerer Bauteile der ersten Linearachse entstehen, in einer Richtung einer zweiten Linearachse der Werkzeugmaschine zu kompensieren, z. B. durch Anpassen einer Achs-Sollposition der zweiten Linearachse zum Ausgleichen eines Positionsfehlers in Richtung der zweiten Linearachse.

Erfindungsgemäß umfasst der Schritt des Kompensierens einer temperaturabhängigen Lageveränderung weiterhin den Schritt Anpassen eines ersten Achs-Sollpositionswerts einer zweiten Linearachse der Werkzeugmaschine in Abhängigkeit des ersten Kompensationswerts, wobei das Anpassen der Achs-Sollposition der zweiten Linearachse in Abhängigkeit der Achsposition der ersten Linearachse durchgeführt wird. Somit können thermische Verlagerungen bzw. Positionsfehler aufgrund von thermischen Verlagerungen dadurch kompensiert werden, dass die Achs-Sollposition einer Linearachse der Werkzeugmaschine in Abhängigkeit des berechneten Kompensationswerts korrigiert bzw. angepasst wird, so dass durch die angepasste Achs-Sollposition der zweiten Linearachse der Positionsfehler in Richtung der zweiten Linearachse, der durch die thermischen Verbiegungen der Bauteile der ersten Linearachse entsteht, kompensiert werden kann.

Die Berechnung eines Kompensationswerts bzw. mehrerer Kompensationswerte erfolgt hierbei mit einem möglichst schnellen Zeittakt in einer Kontrolleinheit, z.B. der sogenannten Maschinen-NC (NC für "Numerical Control"), oder der speicherprogrammierbaren Steuerung (SPS), auch Maschinen-LC oder Maschinen-PLC (PLC für "Programmable Logic Controller") genannt. Positionsabhängig berechnete Kompensationswerte können dann durch die Kontrolleinheit, die sogenannte Maschinen-NC der einen oder der mehreren Achs-Sollwerte der Linearachsen der Werkzeugmaschine überlagert werden. Weiterhin können den Kompensationswerten zur Kompensation der thermisch bedingten Verformungen durch die (ungleichmäßigen) Erwärmungen der Maschinen-Gestellbauteile weitere Kompensationsanteile überlagert werden, z. B. zur Kompensation der Verlagerungen durch die Motorspindel.

Es wird somit ein Verfahren vorgeschlagen, bei dem die thermisch bedingten Verlagerungen an einer Werkzeugmaschine vorzugsweise durch Messung einer oder mehrerer Temperaturen an der Werkzeugmaschine und durch die Berechnung eines oder mehrerer zur gemessenen Temperatur korrelativen Kompensationswerte in der Maschinensteuerung durch Überlagerung der Achs-Sollpositionen in der Maschinensteuerung bzw. einer Lagereglereinrichtung kompensiert werden können. Der oder die berechneten Kompensationswerte werden vorzugsweise dazu verwendet, Achs-Sollpositionen der einen oder mehreren Linearachsen der Werkzeugmaschine zu korrigieren, um die temperaturabhängigen Lageveränderungen jeweils in der Richtung der Achsen zu kompensieren.

Gemäß einem Ausführungsbeispiel umfasst das erfindungsgemäße Verfahren weiterhin die Schritte Erfassen zumindest einer zweiten Temperatur an einer dritten Temperaturmessposition einer zweiten Linearachse der Werkzeugmaschine, Ermitteln einer zweiten Temperaturdifferenz zwischen einer zweiten Bezugstemperatur und der zweiten Temperatur, und Bestimmen eines zweiten Kompensationswerts in Abhängigkeit der zweiten Temperaturdifferenz, wobei eine temperaturabhängige Lageveränderung in Abhängigkeit des ersten Kompensationswerts und des zweiten Kompensationswerts kompensiert wird, und wobei der zweite Kompensationswert weiterhin in Abhängigkeit einer Achsposition der zweiten Linearachse bestimmt wird. Somit kann vorteilhaft ebenfalls eine thermische Verlagerung durch thermische Ausdehnung und Verformung eines oder mehrerer Bauteile einer zweiten Linearachse der Werkzeugmaschine durch Ermitteln einer zweiten Temperaturdifferenz kompensiert werden. Hierfür wird vorzugsweise ein zweiter Kompensationswert in Abhängigkeit der Achsposition der zweiten Linearachse bestimmt, so dass sowohl die Achsposition der ersten als auch die Achsposition der zweiten Linearachse in die Kompensation der temperaturabhängigen Verlagerungen mit eingehen und eine noch optimalere Thermo-Kompensation erreicht werden kann.

Vorzugsweise umfasst der Schritt des Kompensierens einer temperaturabhängigen Lageveränderung weiterhin die Schritte Anpassen eines ersten Achs-Sollpositionswerts der zweiten Linearachse der Werkzeugmaschine in Abhängigkeit des ersten Kompensationswerts und/oder Anpassen eines zweiten Achs-Sollpositionswerts der ersten Linearachse der Werkzeugmaschine in Abhängigkeit des zweiten Kompensationswerts, wobei das Anpassen der Achs-Sollposition der zweiten Linearachse vorzugsweise in Abhängigkeit der Achsposition der ersten Linearachse und das Anpassen der Achs-Sollposition der ersten Linearachse vorzugsweise in Abhängigkeit der Achsposition der zweiten Linearachse durchgeführt wird. Dies ermöglicht es vorteilhaft, dass die Achs-Sollposition der einen Linearachse jeweils vorteilhaft in Abhängigkeit der Achsposition der jeweils anderen Linearachse kompensiert werden kann, so dass jeweils Verformungen und Verlagerungen durch inhomogene Erwärmung von Bauteilen, die Positionsfehler senkrecht zur Vorschubrichtung einer der Linearachsen erzeugen, durch Anpassen der Achs-Sollposition der jeweilig anderen Linearachse kompensiert bzw. korrigiert werden können.

Erfindungsgemäß ist die erste Bezugstemperatur eine an einer zweiten Temperaturmessposition der ersten Linearachse gemessene Temperatur und vorzugsweise ist die zweite Bezugstemperatur eine an einer vierten Temperaturmessposition der zweiten Linearachse gemessene Temperatur. Alternativ kann die zweite Bezugstemperatur gleich der ersten Bezugstemperatur sein, insbesondere gleich einer an einer Bezugstemperaturmessposition der Werkzeugmaschine erfassten einheitlichen Bezugstemperatur für zwei oder mehr (oder alle) Bauteile der Werkzeugmaschine.

6

Zum Beispiel können die zweite Bezugstemperatur und die erste Bezugstemperatur gleich einer von der Umgebungstemperatur der Werkzeugmaschine abhängige Bezugstemperatur sein. Dies ermöglicht es vorteilhaft, dass z.B. bei seriell aufeinander aufbauenden Achsen bei einer zweiten Linearachse, die auf der ersten Linearachse aufbaut, ein Kompensationswert in Abhängigkeit der Achsposition der ersten sowie in Abhängigkeit der Achsposition der zweiten Linearachse bestimmt wird. Somit können für die Anpassung der Achs-Sollpositionen der zweiten Linearachse sowohl thermische Verlagerungen durch Verformung von Bauteilen der ersten Linearachse als auch thermische Verlagerungen durch Verformung von Bauteilen der zweiten Linearachse optimal kompensiert werden. Ist weiterhin auch der zweite Kompensationswert in Abhängigkeit einer Achsposition der ersten Linearachse bestimmt, können vorteilhaft jeweils Kompensationswerte für beide Linearachsen berechnet werden, bei denen jeweils die Achspositionen der ersten als auch der zweiten Linearachse berücksichtigt werden können, wodurch eine noch optimalere Thermo-Kompensation ermöglicht wird.

Erfindungsgemäß sind die erste und die zweite Linearachse der Werkzeugmaschine als zwei seriell aufeinander aufbauende Achsen, mit einseitiger Auskragung oder auf einem Maschinenbett aufbauend, ausgebildet, wobei die zweite Linearachse auf der ersten Linearachse aufbaut und der erste Kompensationswert weiterhin in Abhängigkeit einer Achsposition der zweiten Linearachse bestimmt wird. Hierbei wird der zweite Kompensationswert weiterhin in Abhängigkeit einer Achsposition der ersten Linearachse bestimmt.

Gemäß einem bevorzugten Ausführungsbeispiel umfasst das erfindungsgemäße Verfahren weiterhin die Schritte Bestimmen eines dritten Kompensationswerts in Abhängigkeit der ersten Temperaturdifferenz, und/oder Bestimmen eines vierten Kompensationswerts in Abhängigkeit der zweiten Temperaturdifferenz, wobei eine temperaturabhängige Lageveränderung in einer Richtung der ersten Linearachse vorzugsweise in Abhängigkeit des dritten Kompensationswerts und des zweiten Kompensationswerts kompensiert wird und eine temperaturabhängige Lageveränderung vorzugsweise in einer Richtung der zweiten Linearachse in Abhängigkeit des ersten Kompensationswerts und des vierten Kompensationswerts kompensiert wird, wobei der dritte Kompensationswert weiterhin vorzugsweise in Abhängigkeit der Achsposition der ersten Linearachse bestimmt wird und der vierte Kompensationswert weiterhin vorzugsweise in Abhängigkeit der Achsposition der zweiten Linearachse bestimmt wird. Somit kann bei einer Werkzeugmaschine mit zumindest zwei seriell aufeinander aufbauenden Achsen eine optimale Thermo-Kompensation erzielt werden, bei der Kompensationswerte derart berechnet werden, dass sowohl eine Temperaturdifferenz eines oder mehrerer Bauteile der ersten Linearachse als auch eine Temperaturdifferenz eines oder mehrerer Bauteile der zweiten Linearachse eingehen und eine Mehrzahl an Kompensationswerten berechnet werden, in die jeweils eine oder mehrer Achspositionen der Linearachsen eingehen und berücksichtigt werden. Dies ermöglicht eine hervorragende Kompensation von thermischen Verlagerungen in einer Konfiguration einer Werkzeugmaschine, bei der die Position von Werkzeug und Werkstück durch mehrere, aufeinander serielle aufbauende Achsen z. B. mit einseitiger unveränderlicher Auskragung bestimmt wird, bei denen sich die Effekte sonst durch den seriell aufeinander aufbauenden Aufbau überlagern. Somit können Effekte kompensiert werden, bei denen sich thermische Verlagerungen nicht nur durch die Effekte an einem Bauteil ergeben, sondern auch durch Überlagerung der temperaturabhängigen Effekte, die an allen Bauteilen geschehen können. Hierzu wird vorzugsweise eine thermische Verlagerung am Werkzeug oder Werkstück durch eine Mehrzahl von Temperaturdifferenzen an den Bauteilen der Achsen bzw. der Werkzeugmaschine in Abhängigkeit der Achsposition bzw. der Achspositionen bestimmt, vorzugsweise der Achspositionen aller beteiligten Bewegungsachsen, die zur Werkzeug- oder Werkstückposition beitragen.

Vorzugsweise umfasst der Schritt des Kompensierens einer temperaturabhängigen Lageveränderung weiterhin die Schritte Anpassen eines ersten Achs-Sollpositionswerts der zweiten Linearachse der Werkzeugmaschine in Abhängigkeit des ersten Kompensationswerts und des vierten Kompensationswerts und/oder Anpassen eines zweiten Achs-Sollpositionswerts der ersten Linearachse der Werkzeugmaschine in Abhängigkeit des dritten Kompensationswerts und des zweiten Kompensationswerts.

Vorzugsweise umfasst die Werkzeugmaschine eine Mehrzahl von seriell aufeinander aufbauenden Linearachsen mit Auskragung, wobei vorzugsweise für jede der Mehrzahl von Linearachsen zumindest eine Temperatur an einer Temperaturmessposition der Linearachse ermittelt wird und eine jeweilige Temperaturdifferenz zwischen einer jeweiligen Bezugstemperatur und der jeweiligen ermittelten Temperatur ermittelt wird, und vorzugsweise für jede der Linearachsen ein Kompensationsgesamtwert bestimmt wird, der vorzugsweise einer Summe einer Mehrzahl von Kompensationswerten entspricht, deren Anzahl vorzugsweise gleich der Anzahl der seriell aufeinander aufbauenden Linearachsen ist, wobei jeder einzelne Kompensationswert vorzugsweise direkt proportional zu genau einer der Temperaturdifferenzen ist. Beispielhaft sei hierbei das später beschriebene siebte Ausführungsbeispiel genannt, in dem eine allgemeine Formel zur Berechnung von Kompensationswerten für Linearachsen gemäß der vorstehenden Beschreibung angegeben wird.

Somit kann vorteilhaft eine Thermo-Kompensation durchgeführt werden, bei der für jede einer Mehrzahl von aufeinander seriell aufbauender Linearachsen ein Kompensationsgesamtwert bestimmt wird, der vorzugsweise einer Summe aus Kompensationswerten entspricht, die jeweils direkt proportional zu einer der Temperaturdifferenzen an einer der Achsen ist, so dass der Kompensationsgesamtwert einer Summe von Kompensationswerten entspricht, bei der jede einzelne Kompensationswert von einer anderen Temperaturdifferenz einer anderen Linearachse linear abhängt, so dass für jeden Kompensationsgesamtwert alle Temperaturdifferenzen aller Linearachsen eingehen können.

Die jeweiligen Kompensationswerte sind hierbei natürlich erfindungsgemäß positionsabhängig bestimmt und hängen zumindest von einer Achsposition einer der Linearachsen ab, ggf. auch von mehreren oder gar allen Linearachspositionen der seriell aufeinander aufbauenden Linearachsen. Eine besonders allgemeine Formel wird hierbei später in Bezug auf das sechste bzw. siebte Ausführungsbeispiel der vorliegenden Erfindung eingehend beschrieben. Vorzugsweise wird jeder einzelne Kompensationswert in Abhängigkeit einer Summe aus positionsabhängigen Termen gebildet, wobei jeder positionsabhängige Term vorzugsweise von der Achsposition von zumindest einer der Linearachsen abhängt. Vorzugsweise hängt jeder einzelne der positionsabhängigen Terme von dem Verhältnis der Achsposition zu der Achslänge zumindest einer der Linearachsen ab. Vorzugsweise umfasst jeder einzelne Kompensationswert einen positionsabhängigen Term für die Linearachse, zu deren Temperaturdifferenz der Kompensationswert direkt proportional ist. Weiterhin umfasst jeder einzelne Kompensationswert vorzugsweise positionsabhängige Terme zumindest für alle vorangegangenen Linearachsen der Mehrzahl seriell aufbauender Linearachsen.

Wenn die erste Linearachse ein auf einem Maschinenbett verfahrbarer Schlitten ist, wird der erste Kompensationswert weiterhin vorzugsweise derart bestimmt, dass ein weiterer Faktor (AP1- AL1/2) / (AL1/2) eingeht, wobei AP1 die Achsposition der ersten Linearachse angibt und AL1 die Achslänge der ersten Linearachse angibt. Somit kann die positionsabhängige Thermo- Kompensation von thermischen Verlagerungen an der Werkzeugmaschine auch auf Linearachsen angewendet werden, bei denen ein verfahrbarer Schlitten auf einem Maschinenbett angeordnet ist, wobei das Maschinenbett ggf. durch thermische Verformung gewölbt bzw. gebogen sein kann. Um hierbei eine vorteilhafte Kompensation der thermischen Verlagerungen angepasst an die Linearachse mit dem verfahrbaren Schlitten auf dem Maschinenbett bereitzustellen, wird hierbei ein weiterer Faktor angewendet, der sicherstellt, dass die berechneten Kompensationswerte zur Kompensation der thermischen Verlagerungen z.B. bei einer mittigen Position des verfahrbaren Schlittens auf dem Maschinenbett minimal sind.

Vorzugsweise wird der Schritt Bestimmen eines oder mehrerer Kompensationswerte in einer Lagereglereinrichtung einer numerischen Steuereinrichtung der Werkzeugmaschine oder in einer speicherprogrammierbaren Steuereinrichtung der Werkzeugmaschine ausgeführt. Weiterhin wird der Schritt Kompensieren einer temperaturabhängigen Lageveränderung vorzugsweise in Abhängigkeit der einen oder mehreren Kompensationswerte in der numerischen Steuereinrichtung der Werkzeugmaschine ausgeführt. Die Berechnung der positionsabhängigen Kompensationswerte muss mit einem möglichst schnellen Zeittakt in der Maschinensteuerung der Werkzeugmaschine vorgenommen werden, wofür eine Berechnung der Kompensationswerte in der Maschinenkontrolleinheit, der sogenannten Werkzeugmaschinen-NC im Lageregler-Takt vorgeschlagen wird.

Alternativ kann eine Berechnung weiterhin in der Werkzeugmaschinen-PLC (in der SPS, d. h. speicherprogrammierbaren Steuereinheit der Werkzeugmaschine) erfolgen. Hierbei würde die Berechnung der Kompensationswerte nicht mehr synchron mit dem Lageregler-Takt erfolgen, so dass es bei schnellen Verfahrbewegungen der Maschine durch die positionsabhängigen Therme zu einem "Voreilen" oder einem "Nacheilen" der Kompensationswerte kommen kann. Daher ist die Berechnung der Kompensationswerte in der Kontrolleinheit (d. h. der Maschinen-NC, vorteilhaft, allerdings sind die Nacheil- bzw. Voreileffekte klein, solange der PLC-Takt nicht signifikant langsamer ist als der Lageregler-Takt der Maschinensteuerung. Ist z. B. der PLC-Takt wie bei vielen Maschinensteuerungen mit 4 ms um den Faktor 4 langsamer als der NC-Lageregler-Takt z. B. mit 1 ms, so kann die Maschinenachse bzw. die Maschinenachsen selbst bei einer außerordentlich hohen maximalen Vorschubgeschwindigkeit von bis zu 100 m pro Minute in 4 ms nicht mehr als 6,7 mm zurücklegen. Bei einer Gesamtachslänge von 500 mm führt dies über den positionsabhängigen Term Achsposition zu Achslänge jedoch nur zu einem Fehler im positionsabhängigen Kompensationswert von maximal 1,3 %, so dass die Fehler, die durch eine Berechnung der Kompensationswerte in der Maschinen-PLC entstehen, durch die geringere Geschwindigkeit der PLC gegenüber der NC vernachlässigbar sind.

Weiterhin wird wie folgt beschrieben eine Vorrichtung zum Kompensieren einer temperaturabhängigen Lageveränderung an einer Werkzeugmaschine mit zumindest einer Linearachse vorgeschlagen, die dazu eingerichtet ist, ein Verfahren zum Kompensieren einer temperaturabhängigen Lageveränderung an der Werkzeugmaschine nach zumindest einem der vorstehend beschriebenen Verfahren bzw. bevorzugten Verfahren durchzuführen. Im Folgenden werden hierzu im Wesentlichen die Mittel beschrieben, die dazu eingerichtet sind, die Schritte der vorstehend beschriebenen Verfahren bzw. bevorzugte Aspekte davon durchzuführen.

Weiterhin wird eine Vorrichtung zum Kompensieren einer temperaturabhängigen Lageveränderung an einer Werkzeugmaschine mit zumindest einer ersten Linearachse gemäß zumindest einem der vorstehend beschriebenen Verfahren bereitgestellt. Die Vorrichtung umfasst ein erstes Temperaturerfassungsmittel zum Erfassen zumindest einer ersten Temperatur an der ersten Temperaturmessposition einer ersten Linearachse der Werkzeugmaschine, ein Temperaturdifferenz-Ermittelungsmittel zum Ermitteln einer ersten Temperaturdifferenz zwischen einer ersten Bezugstemperatur und der ersten Temperatur, ein Kompensationswert-Bestimmungsmittel zum Bestimmen eines ersten Kompensationswerts in Abhängigkeit der ersten Temperaturdifferenz, und ein Lageveränderungs-Kompensationsmittel zum Kompensieren einer temperaturabhängigen Lageveränderung in Abhängigkeit des ersten Kompensationswerts. Das Lageveränderungs-Kompensationsmittel ist dazu eingerichtet, den ersten Kompensationswert weiterhin in Abhängigkeit einer Achsposition der ersten Linearachse zu bestimmen.

Schließlich wir gemäß der vorliegenden Erfindung noch ein System mit einer Werkzeugmaschine mit zumindest einer ersten Linearachse und einer der vorstehend beschriebenen Vorrichtungen zum Kompensieren einer temperaturabhängigen Lageveränderung an der Werkzeugmaschine gemäß einem der vorstehend beschriebenen, erfindungsgemäßen Verfahren bereitgestellt.

Zusammenfassend wird erfindungsgemäß ein Verfahren und eine Vorrichtung zum Kompensieren einer temperaturabhängigen Lageveränderung an einer Werkzeugmaschine mit zumindest einer Linearachse bereitgestellt, die es ermöglicht, im Vergleich zum Stand der Technik ein verbessertes Kompensationsverfahren für die Kompensation von temperaturabhängigen Lageveränderungen an der Werkzeugmaschine durchzuführen, da zusätzlich zu ermittelten Temperaturdifferenzen an Bauteilen der Linearachsen bzw. der Werkzeugmaschine zusätzlich ein positionsabhängiger Anteil in Abhängigkeit einer oder mehrerer Achspositionen der einen oder mehreren Linearachsen der Werkzeugmaschine ermittelt wird, so dass die Kompensation im Vergleich zum Stand der Technik verbessert zusätzlich positionsabhängig durchgeführt werden kann.

## KURZBESCHREIBUNG DER FIGUREN

Fig. 1 zeigt schematisch einen verfahrbaren Schlitten einer ersten Linearachse einer Werkzeugmaschine unter dem Einfluss homogener Erwärmung und einer daraus resultierenden linearen Wärmedehnung.

Fig.2 zeigt schematisch eine biegende Verformung eines Bauteils einer Werkzeugmaschine, z. B. eines Schlittens, unter dem Einfluss einer inhomogenen Erwärmung.

Fig. 3 illustriert einen positionsabhängigen Positionsfehler eines Schlittens einer ersten Linearachse einer Werkzeugmaschine bei einer temperaturabhängigen Verformung bei inhomogener Erwärmung.

Fig.4A und Fig.4B zeigen die thermische Verformung bei inhomogener Erwärmung von Bauteilen zweier seriell aufeinander aufbauender Linearachsen einer Werkzeugmaschine.

Fig. 5 zeigt beispielhaft die temperaturabhängige Verformung eines Maschinenbetts einer Werkzeugmaschine bei inhomogener Erwärmung.

Fig. 6 zeigt schematisch eine Vorrichtung zum Kompensieren einer temperaturabhängigen Lageveränderung an einer Werkzeugmaschine nach einem Ausführungsbeispiel der vorliegenden Erfindung.

## AUSFÜHRLICHE BESCHREIBUNG BEVORZUGTER AUSFÜHRUNGSBEISPIELE DER VORLIEGENDEN ERFINDUNG

Im Folgenden werden Beispiele zum Hintergrund der Erfindung und bevorzugte Ausführungsbeispiele der vorliegenden Erfindung unter Bezugnahme auf die beigefügten Figuren detailliert beschrieben. Die vorliegende Erfindung ist jedoch nicht auf die beschriebenen Ausführungsbeispiele beschränkt. Die vorliegende Erfindung ist durch den Umfang der Patentansprüche definiert. Gleiche bzw. ähnliche Merkmale der Ausführungsbeispiele werden in den Figuren mit gleichen Bezugsziffern gekennzeichnet.

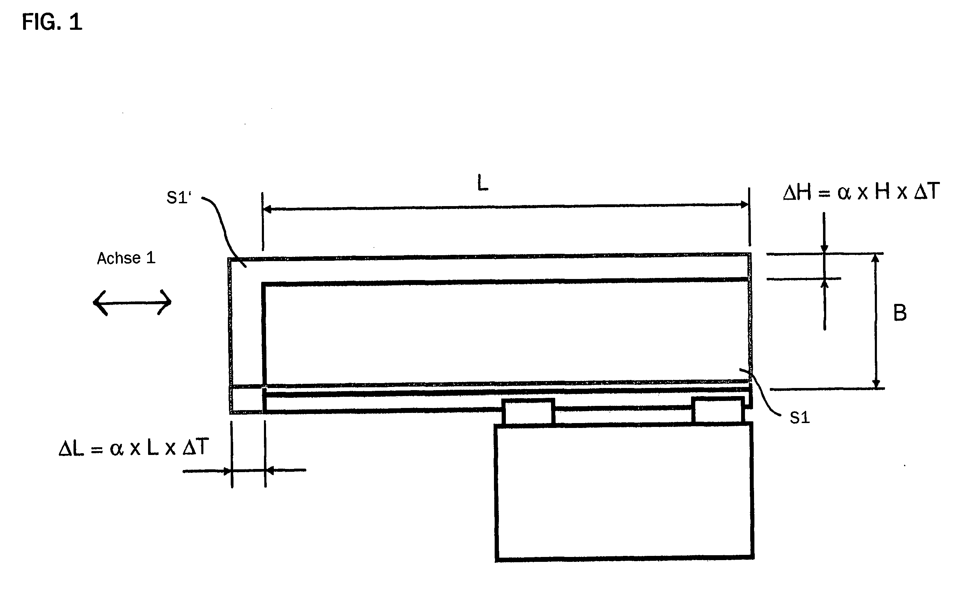

Fig.1 zeigt einen Schlitten S1 einer ersten Linearachse A1 einer Werkzeugmaschine, der in Richtung des Teils "Achse 1" verfahrbar ist und eine Länge L und eine Höhe H aufweist. Bei einer homogenen Erwärmung bzw. Temperaturänderung wird der Schlitten S1 linear gedehnt (S1 kennzeichnet hierbei den Schlitten in ungedehnter Situation, d.h. zum Beispiel bei einer bestimmten Bezugs- oder Basistemperatur, und S1' kennzeichnet den Schlitten in gedehnter Situation), wobei sich die Höhenänderung bzw. die Längenänderung wie folgt berechnen:

$$\Delta L = \alpha \cdot L \cdot \Delta T \qquad (3)$$

$$\Delta H = \alpha \cdot H \cdot \Delta T \qquad (4)$$

ΔL beschreibt hierbei die Längenänderung bei einer gleichmäßigen Erwärmung um die Temperaturänderung ΔT, und α bezeichnet den Wärmeausdehnungskoeffizienten des Materials des Schlittens S1. ΔH beschreibt die Höhenänderung des Schlittens S1 bei einer homogenen Erwärmung bzw. Temperaturerhöhung um den Betrag ΔT, und α ist der thermische Ausdehnungskoeffizient des Materials des Schlittens S1.

Somit ergibt sich durch eine homogene Erwärmung um den Betrag ΔT ein Wärmegang durch eine lineare thermische Dehnung eines Schlittens oder eines Maschinenbettes einer Werkzeugmaschine, wobei sich dieser Anteil der linearen thermischen Dehnung aus der Temperaturerhöhung ΔT eines Bauteils, multipliziert mit dem Wärmeausdehnungskoeffizienten α ergibt.

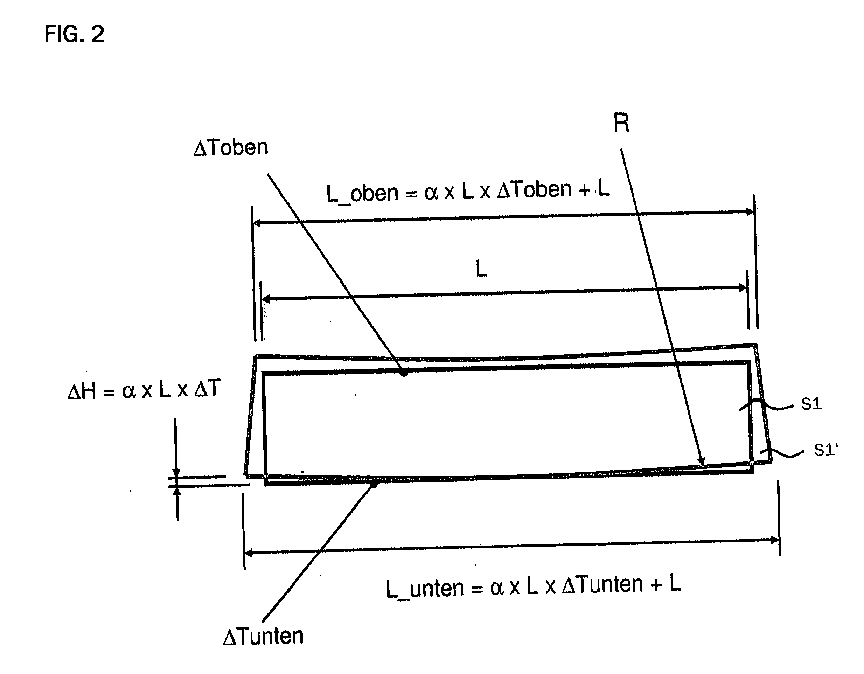

Ein weiterer Anteil des Wärmegangs ergibt sich über Temperaturdifferenzen von Bauteilen, z. B. durch eine ungleichmäßige Wärmeeinbringung in die Bauteile der Werkzeugmaschine. Wie bereits vorstehend beschrieben, sind hierbei z. B. Antriebe und Führungen im Allgemeinen an einer Unterseite eines Bauteils angebracht, so dass sich diese Unterseite möglicherweise stärker und schneller erwärmt als die Oberseite eines Bauteils, z. B. Schlittens einer Werkzeugmaschine, so dass sich eine einseitige Erwärmung bzw. eine inhomogene Erwärmung des Bauteils ergibt, die zu einer Verbiegung des Bauteils führt, wie z. B. in Fig. 2 schematisch dargestellt ist.

Durch die unterschiedlichen Erwärmungen an der Oberseite und Unterseite des Bauteils, beschrieben durch die Temperaturänderungen $\Delta T_{OBEN}$ und $\Delta T_{UNTEN}$, ergibt sich in Längsrichtung des Schlittens S1 eine ungleichmäßige Dehnung der Ober- und Unterseite des Schlittens S1, so dass es wie in Fig. 2 dargestellt zu der Verbiegung kommt.

Die Länge an der Oberseite des Schlittens S1 ergibt sich hierbei wie folgt:

$$L_{OBEN} = L + \alpha \cdot L \cdot \Delta T_{OBEN} \qquad (5)$$

Die Länge der Unterseite des Schlittens S1 nach Temperaturänderung ergibt sich wie folgt:

$$L_{UNTEN} = L + \alpha \cdot L \cdot \Delta T_{UNTEN} \qquad (6)$$

Die Verbiegung des Schlittens S1 kann hierbei durch einen Radius R beschrieben werden, wie in Fig. 2 dargestellt, wobei hierbei die folgende Beziehung gilt:

$$R/L_{UNTEN} = (R - H)/L_{OBEN} \qquad (7)$$

Dies kann nach dem Radius R wie folgt aufgelöst werden:

$$R = H \cdot L_{UNTEN} /(L_{UNTEN} - L_{OBEN}) \qquad (8)$$

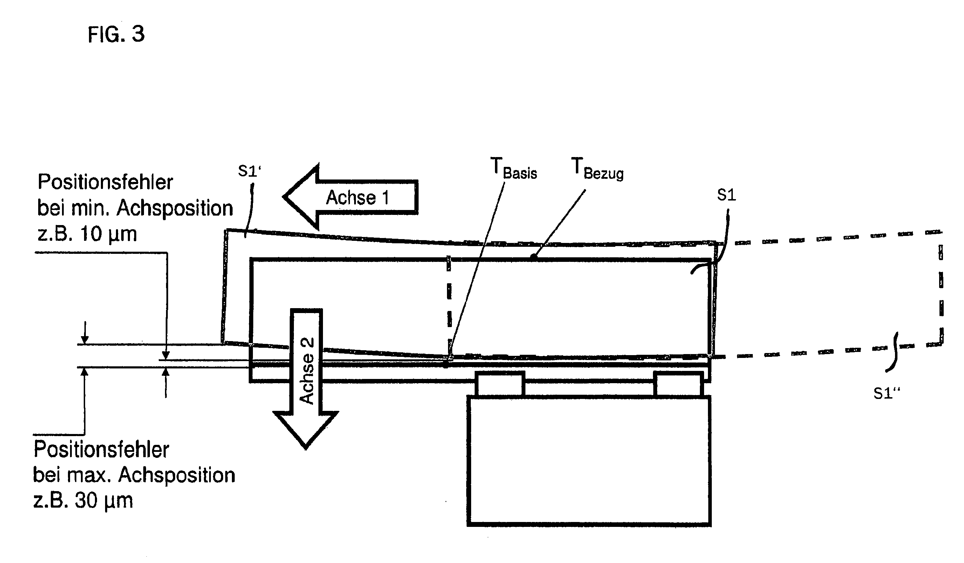

Jedoch führt ein derartig verformter Schlitten S1 bei dem Verfahren in Richtung der Linearachse "Achse 1" an der Werkzeugmaschine keine geradlinige Bewegung mehr aus, sondern verfährt in einer bogenförmigen Bewegung, wie z. B. in Fig. 3 dargestellt ist. Somit weist die thermische Verlagerung bzw. der thermische Positionsfehler einen Anteil in einer Richtung senkrecht zu der ersten Linearachse (Pfeilrichtung "Achse 1"), d. h. in Richtung der zweiten Linearachse (Pfeilrichtung "Achse 2"), aus einem Grundwert, der positionsabhängig ist (hier beispielhaft 10 μm) und einem von der Schlittenposition abhängigen Wert, wobei der Positionsfehler bei minimaler Achsposition, d. h. bei einem Verhältnis Achsposition zu Achslänge gleich Null, beispielhaft 10 μm aufweist und der Positionsfehler bei maximaler Achsposition, d. h. bei einem Verhältnis Achsposition zu Achslänge gleich 1, beispielhaft 30 μm, d. h. den maximalen Positionsfehler, aufweist.

Im folgend beschriebenen ersten Beispiel wird beschrieben, wie eine derartige Verformung eines Schlittens S1 gemäß der vorliegenden Erfindung erfolgreich kompensiert werden kann.

Erstes Beispiel zum Hintergrund der Erfindung

Im ersten Beispiel wird die thermisch bedingte Verlagerung der Maschinenachsen durch einen korrelativen Ansatz kompensiert, wobei ein Kompensationswert nicht nur in Abhängigkeit von einer gemessenen Temperatur, sondern auch in Abhängigkeit von einer Achsposition einer Achse bestimmt wird, die die Position von Werkzeug und/oder Werkstück beeinflusst.

Gemäß dem in Fig. 3 beschriebenen thermisch verformten Schlitten S1 einer ersten Linearachse A1, die den Schlitten S1 in Richtung des Pfeils "Achse 1" verfahren kann, ist es nicht zwingend erforderlich, eine positionsabhängige Kompensation in Richtung der ersten Linearachse zu bestimmen, da sich die Verformung des Schlittens in der Hauptsache in Richtung der senkrecht zur ersten Linearachse A1 stehenden Achse (Pfeilrichtung "Achse 2") ergibt (S1 kennzeichnet hierbei in Fig. 3 den Schlitten in nicht verbogener Situation, d.h. bei $T_{BEZUG} = T_{BASIS}$, S1' kennzeichnet den temperaturabhängig verbogenen Schlitten in einer Verfahrposition bei Achsposition (A1) / Achslänge (A1) ) = 1 und S1" kennzeichnet den temperaturabhängig verbogenen Schlitten in einer Verfahrposition bei Achsposition (A1) / Achslänge (A1) ) = 0).

Somit kann ein Kompensationswert $\Delta A1$ für eine Kompensation in Richtung der Achse 1 wie folgt berechnet werden:

$$\Delta A1 = (T_{BEZUG} - T_{BASIS}) \cdot K\_11 \qquad\qquad (9)$$

Dies entspricht dem Verfahren nach dem Stand der Technik, da in die Berechnung des Kompensationswerts $\Delta A1$ lediglich ein Kompensationsfaktor K_11 und eine Temperaturdifferenz $T_{BEZUG} - T_{BASIS}$ eingeht, wobei die Temperaturdifferenz $T_{BEZUG} - T_{BASIS}$ eine Temperaturdifferenz zwischen der Oberseite und der Unterseite des Schlittens S1 in Fig. 3 beschreibt.

Da jedoch der Positionsfehler in senkrechter Richtung zu der ersten Linearachse A1 durch die thermische Verformung des Schlittens S1 positionsabhängig ist, ist es vorteilhaft, in dieser Situation erfindungsgemäß eine Kompensation mittels Berechnung eines positionsabhängigen Kompensationswerts auszuführen. Hierbei wird gemäß dem ersten Ausführungsbeispiel der vorliegenden Erfindung ein Kompensationswert $\Delta A2$ zur Kompensation eines Positionsfehlers aufgrund der thermischen Verlagerung in Richtung der einer zweiten Linearachse A2, die beispielsweise senkrecht zur ersten Linearachse A1 steht, wie folgt berechnet:

$$\Delta A2 = (T_{BEZUG} - T_{BASIS}) \cdot [K\_21 + K\_22 \cdot (Achsposition(A1)/Achslänge(A1))]$$

$$(10)$$

Hierbei ist wiederum die Berechnung des Kompensationswerts abhängig von der Temperaturdifferenz $T_{BEZUG} - T_{BASIS}$. Weiterhin wird für die Berechnung des Kompensationswerts $\Delta A2$ ein Verhältnis der Achsposition der ersten Linearachse A1 zu der Achslänge der ersten Linearachse A1 berechnet und geht gewichtet mit einem Kompensationsfaktor K_22 in die Berechnung des Kompensationswerts $\Delta A2$ ein. Weiterhin wird ein positionsunabhängiger Anteil des Kompensationswerts $\Delta A2$ durch den zusätzlichen Kompensationsfaktor K_21 ermöglicht. Somit kann die in Fig. 3 gezeigte Positionsabweichung unter Berücksichtigung der Achsposition der ersten Linearachse A1, d. h. der Achse, die den Schritten S1 in Richtung des Pfeils "Achse 1" verfährt, erfolgreich kompensiert werden.

Zweites Beispiel zum Hintergrund der Erfindung

Wie in Fig. 3 ersichtlich ist, führt der Schlitten S1 aufgrund der thermischen Verbiegung eine bogenförmige Bewegung aus, wenn er in Richtung des Pfeils "Achse 1" verfahren wird. Die Genauigkeit der Kompensation des ersten Beispiels kann somit weiterhin dadurch erhöht werden, dass in dem positionsabhängigen Term des Kompensationswerts $\Delta A2$ nicht linear das Verhältnis der Achsposition der ersten Achse A1 zu der Achslänge der ersten Achse A1 eingeht, sondern das Quadrat dieses Verhältnisses, so dass sich die verbesserte Kompensation gemäß den folgenden Formeln (11) und (12) berechnet:

$$\Delta A1 = (T_{BEZUG} - T_{BASIS}) \cdot K\_11 \qquad (11)$$

$$\Delta A2 = (T_{BEZUG} - T_{BASIS}) \cdot [K\_21 + K\_22 \cdot (\text{Achsposition(A1)}/\text{Achslänge(A1)})^2]$$

(12)

Nach Berechnung des Kompensationswerts $\Delta A2$ gemäß dem ersten oder dem zweiten Beispiel kann die thermische Verlagerung basierend auf dem errechneten Kompensationswert $\Delta A2$ kompensiert werden, indem dieser Wert einer Soll-Achsposition einer zweiten Achse, die z. B. ein Werkstück in Richtung des Pfeils "Achse 2" verfährt, überlagert bzw. entsprechend des errechneten Kompensationswerts $\Delta A2$ korrigiert wird. Dies geschieht vorzugsweise in der Maschinensteuerung, z. B. in der Werkzeugmaschinen-NC.

Erstes Ausführungsbeispiel

Wird die Position von Werkzeug und Werkstück, wie bei vielen bekannten Werkzeugmaschinen, durch mehrere, aufeinander seriell aufbauende Achsen mit einseitiger und veränderlicher Auskragung bestimmt, werden sich die Effekte der Verformungen der Bauteile der seriell aufeinander aufbauenden Achsen überlagern.

Die thermische Verlagerung ergibt sich somit nicht nur durch Effekte an einem Bauteil einer Achse, sondern durch die Überlagerung der Effekte, die an allen Bauteilen der beteiligten Achsen erfolgen. Insbesondere wird die thermische Verlagerung am Werkzeug oder Werkstück durch Temperaturdifferenzen an den Bauteilen in Abhängigkeit der Achspositionen aller beteiligten Bewegungsachsen bestimmt, die zur Werkzeug- oder Werkstück-Position beitragen.

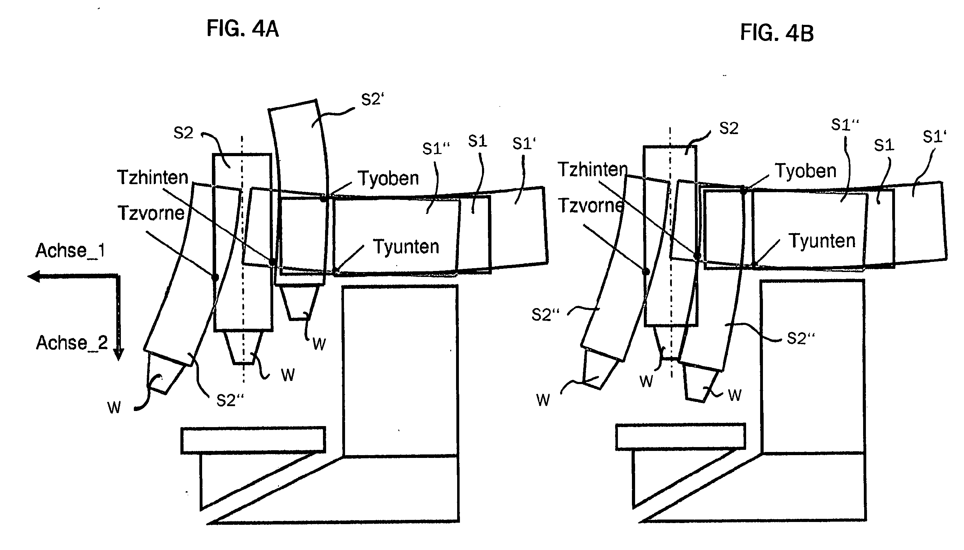

Beispielhaft werden bezüglich des ersten Ausführungsbeispiels der vorliegenden Erfindung zwei seriell aufeinander aufbauende Linearachsen A1 und A2, wie in Fig. 4A und Fig. 4B beispielhaft dargestellt, diskutiert, wobei ein verfahrbares Bauteil S2 der zweiten Linearachse A2 der Werkzeugmaschine verfahrbar an einem verfahrbaren Bauteil S1 der ersten Linearachse A1 der Werkzeugmaschine angeordnet ist. Das Bauteil S1 der ersten Linearachse A1 ist hierbei in Richtung des Pfeils "Achse 1" verfahrbar, und das Bauteil S2 der zweiten Linearachse ist in Richtung des Pfeils "Achse 2" verfahrbar.

An jedem der Bauteile S1 und S2 wird eine Temperatur an einer ersten Messposition auf einer Seite des jeweiligen Bauteils und eine Temperatur an einer zweiten Messposition auf einer entgegengesetzten Seite des jeweiligen Bauteils erfasst, wobei aus den ermittelten Temperaturwerten an entgegengesetzten Seiten der jeweiligen Bauteile Temperaturdifferenzen bestimmt werden. Die vorliegende Erfindung ist jedoch nicht darauf beschränkt, dass an einer Achse zwei Temperaturwerte gemessen werden. Vielmehr ist es ebenso denkbar, dass eine Basistemperatur für mehrere Achsen erfasst wird (z.B. eine Umgebungstemperatur) und nur eine Temperatur an jeder Achse erfasst wird, um eine jeweilige Temperaturdifferenz zur Basistemperatur zu ermitteln. Ebenso ist es möglich, an einer Achse mehr als zwei Temperaturen zu erfassen.

In Fig. 4A und Fig. 4B ist beispielhaft dargestellt, dass an dem Bauteil S1 der ersten Linearachse A1 auf der Oberseite ein Temperaturwert $T_{Y,OBEN}$ und auf der Unterseite ein Temperaturmesswert $T_{Y,UNTEN}$ erfasst wird, aus denen eine Temperaturdifferenz $T_{Y,UNTEN} - T_{Y,OBEN}$ ermittelt wird, die eine inhomogene Erwärmung zwischen der Ober- und der Unterseite des Bauteils S1 der ersten Linearachse A1 angibt. Analog wird auf einer Hinterseite des Bauteils S2 der Linearachse A2 ein Temperaturmesswert $T_{Z,HINTEN}$ und auf der Vorderseite ein Temperaturmesswert $T_{Z,VORNE}$ erfasst, aus denen eine Temperaturdifferenz $T_{Z,HINTEN} - T_{Z,VORNE}$ bestimmt wird, die eine inhomogene Erwärmung des Bauteils S2 der zweiten Linearachse A2 angibt.

Wie in Fig. 4A und Fig. 4B dargestellt ist, führt eine derartige Temperaturdifferenz an dem Bauteil S1 der ersten Linearachse A1 bzw. dem Bauteil S2 der zweiten Linearachse A2 zu einer Verbiegung bzw. thermischen Verformung der jeweiligen Bauteile, die bei Verfahren der jeweiligen Achsen A1 und A2 in Richtung der Pfeile "Achse 1" und "Achse 2" zu thermischen Verlagerungen des Werkzeugs führt, dass ggf. an einer Werkzeugaufnahme W eingespannt ist.

S1 kennzeichnet hierbei in Fig. 4A und Fig. 4B ein Bauteil der ersten Linearachse A1 in nicht verbogener Situation, d.h. bei $T_{Y,UNTEN} = T_{Y,OBEN}$, S1' kennzeichnet das beispielhaft temperaturabhängig verbogene Bauteil der ersten Linearachse A1 in einer Verfahrposition bei Achsposition (A1) / Achslänge (A1) ) = 0 und S1" kennzeichnet das beispielhaft temperaturabhängig verbogene Bauteil der ersten Linearachse A1 in einer Verfahrposition bei Achsposition (A1) / Achslänge (A1) ) = 1. S2 kennzeichnet in Fig. 4A und Fig. 4B ein Bauteil der zweiten Linearachse A2 in nicht verbogener Situation, d.h. bei $T_{Z,HINTEN} = T_{Z,VORNE}$, S2' kennzeichnet das beispielhaft temperaturabhängig verbogene Bauteil der zweiten Linearachse A2 in einer Verfahrposition bei Achsposition (A2) / Achslänge (A2) ) = 0 und S2" kennzeichnet das beispielhaft temperaturabhängig verbogene Bauteil der zweiten Linearachse A2 in einer Verfahrposition bei Achsposition (A2) / Achslänge (A2) ) = 1.

Gemäß des ersten Ausführungsbeispiels der vorliegenden Erfindung werden, wie in den folgenden Formeln (13) und (14) angegeben, jeweils für die Achse A1 ein Kompensationswert $\Delta A1$ und für die Achse A2 ein Kompensationswert $\Delta A2$ ermittelt, die wie in den vorstehend beschriebenen Beispielen dazu verwendet werden können, die Achs-Sollpositionen der Achsen A1 und A2 zu korrigieren bzw. zu überlagern, um die thermische Verlagerung des Werkzeugs an der Werkzeugaufnahme W zu kompensieren.

$$\Delta A1 = (T_{Y,UNTEN} - T_{Y,OBEN}) \cdot [K\_110 + K\_111 \cdot (\text{Achsposition}(A1)/\text{Achslänge}(A1))] +$$
$$+ (T_{Z,HINTEN} - T_{Z,VORNE}) \cdot [K\_120 + K\_122 \cdot (\text{Achsposition}(A2)/\text{Achslänge}(A2))]$$

$$(13)$$

$$\Delta A2 = (T_{Y,UNTEN} - T_{Y,OBEN}) \cdot [K\_210 + K\_211 \cdot (\text{Achsposition}(A1)/\text{Achslänge}(A1))] +$$
$$+ (T_{Z,HINTEN} - T_{Z,VORNE}) \cdot [K\_220 + K\_222 \cdot (\text{Achsposition}(A2)/\text{Achslänge}(A2))]$$

$$(14)$$

Hierbei ist gemäß des ersten Beispiels jeder einzelne der Kompensationswerte $\Delta A1$ und $\Delta A2$ aus einer Summe gebildet, bei der ein erster Summand direkt proportional zu der Temperaturdifferenz der ersten Linearachse A1 ist, d. h. direkt proportional zu $T_{Y,UNTEN} - T_{Y,OBEN}$, und der zweite Summand direkt proportional ist zu der ermittelten Temperaturdifferenz an dem Bauteil S2 der zweiten Linearachse A2, d. h. direkt proportional zu der Temperaturdifferenz $T_{Z,HINTEN} - T_{Z,VORNE}$.

Weiterhin enthält jeder der Summanden einen positionsunabhängigen Anteil, der bei dem Kompensationswert $\Delta A1$ durch die Kompensationsfaktoren K\_110 und K\_120 angegeben ist und einen positionsabhängigen Teil, der durch die Kompensationsfaktoren K\_111 und K\_122 normiert ist. Bei dem Kompensationswert $\Delta A2$ für die zweite Linearachse A2 sind die entsprechenden Kompensationsfaktoren für den positionsunabhängigen Anteil durch K\_210 und K\_220 angegeben, und die jeweils positionsabhängigen Anteile durch die Kompensationsfaktoren K\_211 und K\_222 normiert.

Weiterhin enthält jeder positionsabhängige Anteil ein Verhältnis von einer Achsposition zu einer Achslänge. Hierbei enthält der Summand, der direkt proportional ist zu der Temperaturdifferenz der ersten Linearachse A1, beispielsweise die Abhängigkeit der Achsposition der ersten Linearachse A1 und der Summand, der direkt proportional ist zu der zweiten Temperaturdifferenz der zweiten Linearachse A2, beispielsweise die Abhängigkeit zu der Achsposition der zweiten Linearachse A2. Hierbei ist, wie anhand der Gleichungen (13) und (14) zu sehen ist, beispielhaft der dimensionslose Parameter des Verhältnisses von Achsposition zu Achslänge gewählt. Wie im zweiten Ausführungsbeispiel beispielhaft beschrieben, kann hierbei weiterhin zu einer weiteren Verbesserung der thermischen Kompensation temperaturabhängigen Verlagerungen das Quadrat des Verhältnisses von Achsposition zu Achslänge verwendet werden. Weiterhin können die Formeln (13) und (14) auch vorteilhaft für nicht seriell aufeinander aufbauende Achsen verwendet werden.

Zweites Ausführungsbeispiel

Eine weiter verbesserte Kompensation thermischer Verlagerungen ergibt sich bei seriell aufeinander aufbauenden Achsen gemäß diesem zweiten Ausführungsbeispiel. Im vorstehend beschriebenen ersten Ausführungsbeispiel wurden die Kompensationswerte $\Delta$ A1 und $\Delta A2$ für die erste Linearachse A1 und die zweite Linearachse A2 jeweils derart berechnet, dass Summanden gebildet wurden, in denen Faktoren proportional zu der Temperaturdifferenz der ersten Linearachse A1 eine Positionsabhängigkeit zur Achsposition der ersten Linearachse A1 aufwiesen und Terme, die direkt proportional zu der zweiten Temperaturdifferenz der zweiten Linearachse A2 sind, eine Positionsabhängigkeit bezüglich der Achsposition der zweiten Linearachse aufwiesen.

Jedoch kann eine weiter verbesserte Kompensation temperaturabhängiger Verlagerungen dadurch ermöglicht werden, dass in den Termen, die direkt proportional sind zu der Temperaturdifferenz der ersten Linearachse A1, d. h. direkt proportional zu der Temperaturdifferenz $T_{Y,UNTEN} - T_{Y,OBEN}$, weiterhin die Achsposition der zweiten Linearachse A2 mittels eines weiteren Kompensationsfaktors K\_112 für den Kompensationswert $\Delta A1$ berücksichtigt wird. Auch für die Berechnung des Kompensationswerts $\Delta A2$ kann bei dem Term, der direkt proportional ist zu der Temperaturdifferenz der ersten Linearachse A1, sowohl die Achsposition der ersten Linearachse A1 mit einem Kompensationsfaktor K\_211 berücksichtigt werden, und die Achsposition der zweiten Linearachse A2 mittels des Kompensationsfaktors K\_212.

Dies ist in den folgenden Formeln (15) und (16) angegeben:

$$\Delta A1 = (T_{Y,UNTEN} - T_{Y,OBEN}) \cdot [K\_110 + K\_111 \cdot (\text{Achsposition(A1)/Achslänge(A1)}) +$$
$$+ K\_112 \cdot (\text{Achsposition(A2)/Achslänge(A2)})] +$$
$$+ (T_{Z,HINTEN} - T_{Z,VORNE}) \cdot [K\_120 + K\_122 \cdot (\text{Achsposition(A2)/Achslänge(A2)})]$$

$$(15)$$

$$\Delta A2 = (T_{Y,UNTEN} - T_{Y,OBEN}) \cdot [K\_210 + K\_211 \cdot (\text{Achsposition(A1)/Achslänge(A1)}) +$$
$$+ K\_212 \cdot (\text{Achsposition(A2)/Achslänge(A2)})] +$$
$$+ (T_{Z,HINTEN} - T_{Z,VORNE}) \cdot [K\_220 + K\_222 \cdot (\text{Achsposition(A2)/Achslänge(A2)})]$$

$$(16)$$

Somit wird eine temperaturabhängige Verlagerung dadurch kompensiert, dass für Terme proportional zu einer Temperaturdifferenz einer bestimmten Achse aus einer Mehrzahl aus seriell aufeinander aufbauenden Achsen nicht nur die Achsposition dieser bestimmten Achse, sondern auch die Achspositionen der folgenden, auf dieser bestimmten Achse aufbauenden Achsen berücksichtigt werden.

Dies kann verbessert die Kompensation noch weiter, da selbst bei einer Situation, bei der die Temperaturdifferenz $T_{Z,HINTEN} - T_{Z,VORNE}$ gleich Null ist - das Bauteil S2 der zweiten Linearachse A2 also nicht verformt ist - durch eine Schrägstellung aufgrund einer Verformung des Bauteils S1 dennoch eine Verlagerung des Werkstücks erfolgt, die von der Achsposition der zweiten Linearachse A2 abhängen kann.

Zum Beispiel wird im unverformten Zustand aller Bauteile der Linearachsen A1 und A2 durch ein Verfahren des Bauteils S2 der zweiten Linearachse A2 keine Verlagerung des Werkstücks in Richtung des Pfeils "Achse 1" erfolgen. Wird jedoch lediglich ein Bauteil S1 der ersten Linearachse A1 verformt, wodurch es zu einer Schrägstellung der Linearachse A2 kommen kann, kann eine Positionsänderung des Bauteils S2 dennoch eine Verlagerung des Werkstücks in Richtung des Pfeils "Achse 1" zur Folge haben, so dass eine verbesserte temperaturabhängige Verlagerungskompensation erzielt werden kann, wenn in dem Term, der von der Temperaturdifferenz des ersten Bauteils S1 der ersten Linearachse A1 abhängt, auch die Positionsabhängigkeit der Achsposition der zweiten Achse A2 eingeht.

Drittes Ausführungsbeispiel

Um die Thermo-Kompensation der temperaturabhängigen Verlagerungen des Werkzeugs bzw. des Werkstücks weiter zu verbessern, wird in diesem dritten Ausführungsbeispiel vorgeschlagen, dass für jeder der beiden seriell aufeinander aufbauenden Linearachsen A1 und A2 aus Fig. 4 Kompensationswerte $\Delta A1$ und $\Delta A2$ errechnet werden, die jeweils zwei Summanden umfassen, wobei jeder dieser Summanden zu einer der Temperaturdifferenzen direkt proportional ist und in jedem dieser Summanden die Achsposition jeder der beiden Achsen A1 und A2 eingeht.

Hierfür werden insgesamt, wie in den folgenden Gleichungen (17) und (18) beschrieben ist, die Kompensationsfaktoren K_110, K_120, K_210 und K_220 für die jeweiligen positionsunabhängigen Anteile verwendet, und weitere Kompensationsfaktoren K_111, K_112, K_121, K_122, K_211, K_212, K_221 und K_222 für die positionsabhängigen Anteile. Diese Kompensationsfaktoren können z. B. durch Simulation oder experimentell bestimmt werden, und deren Größe hängt von dem Effekt des jeweiligen Terms ab. Insbesondere können einer oder mehrere der Terme Null oder näherungsweise Null sein, wenn der Term zu der thermischen Verlagerung kaum oder gar nicht beiträgt.

$$\Delta A1 = (T_{Y,UNTEN} - T_{Y,OBEN}) \cdot [K\_110 + K\_111 \cdot (\text{Achsposition(A1)/Achslänge(A1)}) +$$
$$+ K\_112 \cdot (\text{Achsposition(A2)/Achslänge(A2)})] +$$
$$+ (T_{Z,HINTEN} - T_{Z,VORNE}) \cdot [K\_120 + K\_121 \cdot (\text{Achsposition(A1)/Achslänge(A1)}) +$$
$$+ K\_122 \cdot (\text{Achsposition(A2)/Achslänge(A2)})]$$

$$(17)$$

$$\Delta A2 = (T_{Y,UNTEN} - T_{Y,OBEN}) \cdot [K\_210 + K\_211 \cdot (Achsposition(A1)/Achslänge(A1)) +$$
$$+ K\_212 \cdot (Achsposition(A2)/Achslänge(A2))] +$$
$$+ (T_{Z,HINTEN} - T_{Z,VORNE}) \cdot [K\_220 + K\_221 \cdot (Achsposition(A1)/Achslänge(A1)) +$$
$$+ K\_222 \cdot (Achsposition(A2)/Achslänge(A2))]$$

$$(18)$$

Viertes Ausführungsbeispiel

In einem vierten Ausführungsbeispiel werden nun Formeln angegeben für eine Struktur mit N seriell aufeinander aufbauenden Achsen A1 bis AN, wobei die temperaturabhängige Verlagerung ähnlich zu dem zweiten Ausführungsbeispiel durchgeführt wird, d. h. in jeden einzelnen Summanden eines Kompensationswerts für eine der Achsen A1 bis AN gehen jeweils die Achspositionen der zu der jeweiligen Temperaturdifferenz gehörenden Achse und aller auf dieser Achse aufbauenden Achsen ein.

Die Formeln (19) bis (23) beschreiben hierbei die Berechnung eines Kompensationswerts $\Delta A1$ für die erste Linearachse A1, bestehend aus einer Summe aus Summanden $\Delta A11$ bis $\Delta A1N$ für jeder der Linearachsen A1 bis AN.

$$\Delta A11 = (T_{BEZUG,1} - T_{BASIS,1}) \cdot [K\_110 + K\_111 \cdot (Achsposition(A1)/Achslänge(A1)) +$$
$$+ K\_112 \cdot (Achsposition(A2)/Achslänge(A2)) + ... +$$
$$+ K\_11N \cdot (Achsposition(AN)/Achslänge(AN))]$$

$$(19)$$

$$\Delta A12 = (T_{BEZUG,2} - T_{BASIS,2}) \cdot [K\_120 + K\_122 \cdot (Achsposition(A2)/Achslänge(A2)) + ... +$$
$$+ K\_11N \cdot (Achsposition(AN)/Achslänge(AN))]$$

$$(20)$$

$$\Delta A1M = (T_{BEZUG,M} - T_{BASIS,M}) \cdot [K\_1M0 + K\_1MM \cdot (Achsposition(AM)/Achslänge(AM)) + ... +$$
$$+ K\_1MN \cdot (Achsposition(AN)/Achslänge(AN))]$$

$$(21)$$

$$\Delta A1N = (T_{BEZUG,N} - T_{BASIS,N}) \cdot [K\_1N0 + K\_1NN \cdot (Achsposition(AN)/Achslänge(AN))]$$

$$(22)$$

$$\Delta A1 = \Delta A11 + \Delta A12 + ... + \Delta A1M + ... + \Delta A1N$$

$$(23)$$

Die Gleichungen (24) bis (28) beschreiben die Berechnung eines Kompensationswerts $\Delta AN$ für eine Achse AN.

$$\Delta AN1 = (T_{BEZUG,1} - T_{BASIS,1}) \cdot [K\_N10 + K\_N11 \cdot (\text{Achsposition(A1)/Achslänge(A1)}) +$$
$$+ K\_N12 \cdot (\text{Achsposition(A2)/Achslänge(A2)}) + \ldots +$$
$$+ K\_N1N \cdot (\text{Achsposition(AN)/Achslänge(AN)})]$$

$$(24)$$

$$\Delta AN2 = (T_{BEZUG,2} - T_{BASIS,2}) \cdot [K\_N20 + K\_N22 \cdot (\text{Achsposition(A2)/Achslänge(A2)}) + \ldots +$$
$$+ K\_N1N \cdot (\text{Achsposition(AN)/Achslänge(AN)})]$$

$$(25)$$

$$\Delta ANM = (T_{BEZUG,M} - T_{BASIS,M}) \cdot [K\_NM0 + K\_NMM \cdot (\text{Achsposition(AM)/Achslänge(AM)}) + \ldots +$$
$$+ K\_NMN \cdot (\text{Achsposition(AN)/Achslänge(AN)})]$$

$$(26)$$

$$\Delta ANN = (T_{BEZUG,N} - T_{BASIS,N}) \cdot [K\_NN0 + K\_NNN \cdot (\text{Achsposition(AN)/Achslänge(AN)})]$$

$$(27)$$

$$\cdot \Delta AN = \Delta AN1 + \Delta AN2 + \ldots + \Delta ANM + \ldots + \Delta ANN$$

$$(28)$$

Fünftes Ausführungsbeispiel

Die folgenden Formeln geben nun analog zu dem dritten Ausführungsbeispiel für zwei seriell aufeinander aufbauende Linearachsen A1 und A2 die Formeln für allgemeine Situation von N linear aufeinander aufbauenden Linearachsen A1 bis AN an.

Hierbei beschreiben die Formeln (29) bis (33) die Berechnung eines Kompensationswerts ΔA1 für die erste Linearachse A1. Die Formeln (34) bis (38) beschreiben die Berechnung eines Kompensationswerts ΔAN für die N-te Linearachse AN. In diesem fünften und in dem vorangegangenen vierten Ausführungsbeispiel beschreibt der Parameter M eine natürliche Zahl M mit M > 1 und M < N.

$$\Delta A11 = (T_{BEZUG,1} - T_{BASIS,1}) \cdot [K\_110 + K\_111 \cdot (\text{Achsposition(A1)/Achslänge(A1)}) +$$
$$+ K\_112 \cdot (\text{Achsposition(A2)/Achslänge(A2)}) + \ldots +$$
$$+ K\_11N \cdot (\text{Achsposition(AN)/Achslänge(AN)})] \quad .$$

$$(29)$$

$$\Delta A12 = (T_{BEZUG,2} - T_{BASIS,2}) \cdot [K\_120 + K\_121 \cdot (Achsposition(A1)/Achsl\ddot{a}nge(A1)) +$$
$$+ K\_122 \cdot (Achsposition(A2)/Achsl\ddot{a}nge(A2)) + \ldots +$$
$$+ K\_12N \cdot (Achsposition(AN)/Achsl\ddot{a}nge(AN))]$$

$$(30)$$

$$\Delta A1M = (T_{BEZUG,M} - T_{BASIS,M}) \cdot [K\_1M0 + K\_1M1 \cdot (Achsposition(A1)/Achsl\ddot{a}nge(A1)) +$$
$$+ K\_1M2 \cdot (Achsposition(A2)/Achsl\ddot{a}nge(A2)) + \ldots +$$
$$+ K\_1MN \cdot (Achsposition(AN)/Achsl\ddot{a}nge(AN))]$$

$$(31)$$

$$\Delta A1N = (T_{BEZUG,N} - T_{BASIS,N}) \cdot [K\_1N0 + K\_1N1 \cdot (Achsposition(A1)/Achsl\ddot{a}nge(A1)) +$$
$$+ K\_1N2 \cdot (Achsposition(A2)/Achsl\ddot{a}nge(A2)) + \ldots +$$
$$+ K\_1NN \cdot (Achsposition(AN)/Achsl\ddot{a}nge(AN))]$$

$$(32)$$

$$\Delta A1 = \Delta A11 + \Delta A12 + \ldots + \Delta A1M + \ldots + \Delta A1N$$

$$(33)$$

$$\Delta AN1 = (T_{BEZUG,1} - T_{BASIS,1}) \cdot [K\_N10 + K\_N11 \cdot (Achsposition(A1)/Achsl\ddot{a}nge(A1)) +$$
$$+ K\_N12 \cdot (Achsposition(A2)/Achsl\ddot{a}nge(A2)) + \ldots +$$
$$+ K\_N1N \cdot (Achsposition(AN)/Achsl\ddot{a}nge(AN))]$$

$$(34)$$

$$\Delta AN2 = (T_{BEZUG,2} - T_{BASIS,2}) \cdot [K\_N20 + K\_N21 \cdot (Achsposition(A1)/Achsl\ddot{a}nge(A1)) +$$
$$+ K\_N22 \cdot (Achsposition(A2)/Achsl\ddot{a}nge(A2)) + \ldots +$$
$$+ K\_N2N \cdot (Achsposition(AN)/Achsl\ddot{a}nge(AN))]$$

$$(35)$$

$$\Delta A1M = (T_{BEZUG,M} - T_{BASIS,M}) \cdot [K\_NM0 + K\_NM1 \cdot (Achsposition(A1)/Achslänge(A1)) +$$
$$+ K\_NM2 \cdot (Achsposition(A2)/Achslänge(A2)) + \ldots +$$
$$+ K\_NMN \cdot (Achsposition(AN)/Achslänge(AN))]$$

$$(36)$$

$$\Delta A1N = (T_{BEZUG,N} - T_{BASIS,N}) \cdot [K\_NN0 + K\_NN1 \cdot (Achsposition(A1)/Achslänge(A1)) +$$
$$+ K\_NN2 \cdot (Achsposition(A2)/Achslänge(A2)) + \ldots +$$
$$+ K\_NNN \cdot (Achsposition(AN)/Achslänge(AN))]$$

$$(37)$$

$$\Delta AN = \Delta AN1 + \Delta AN2 + \ldots + \Delta ANM + \ldots + \Delta ANN$$

$$(38)$$

Sechstes Ausführungsbeispiel

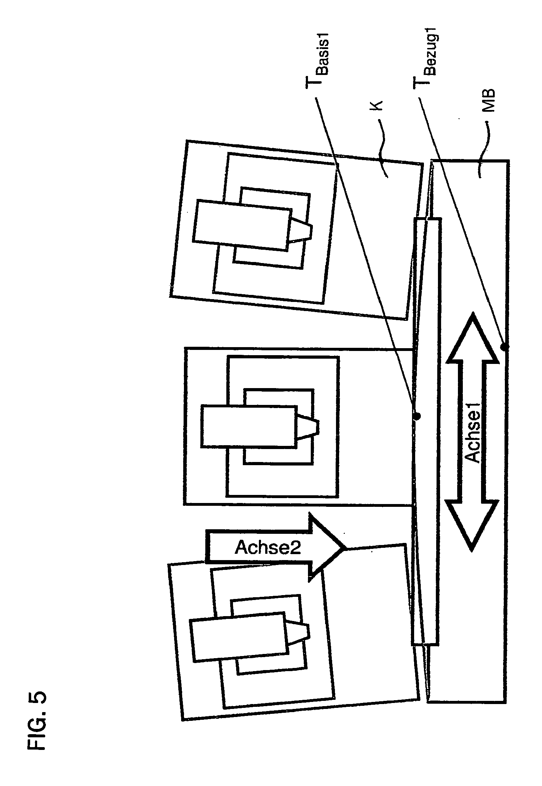

Anhand des sechsten Ausführungsbeispiels wird eine modifizierte Berechnung eines Kompensationswerts beschrieben für einen Fall, wie er z. B. in Fig. 5 dargestellt ist, bei der eine Achse nicht durch eine Linearachse mit einseitiger Auskragung, sondern z. B. wie die Achse A1 in Fig.5 als ein auf einem Maschinenbett MB verfahrbarer Kreuzschlitten K ausgebildet ist.

Hierbei wird durch die veränderte Positionsabhängigkeit der thermischen Verlagerung gemäß des sechsten Ausführungsbeispiels vorgeschlagen, bei der Berechnung eines oder mehrerer der Kompensationswerte weiterhin einen Korrekturfaktor für die veränderte Positionsabhängigkeit bei der Berechnung der Kompensationswerte mit einzubeziehen, z. B. gemäß dem Korrekturfaktor KFA1, wie in Gleichung (41) angegeben.

Hierbei wird zumindest ein Kompensationswertssummand, der direkt proportional zu der auf dem Maschinenbett MB angeordneten Linearachse der Korrekturfaktor KFA1 aufmultipliziert.

Weiterhin wird bevorzugt auch für die jeweilige Positionsabhängigkeit normiert mit dem jeweiligen Kompensationsfaktor, hier beispielhaft K_111 und K_M11 statt des Verhältnisses von Achsposition zu Achslänge der Korrekturfaktor KFA für die jeweilige Linearachse, hier beispielhaft KFA1 für die erste Linearachse A1, eingesetzt.

$$\Delta A11 = (T_{BEZUG,1} - T_{BASIS,1}) \cdot [K\_110 + K\_111 \cdot KFA1 +$$
$$+ K\_112 \cdot (Achsposition(A2)/Achslänge(A2)) + \ldots +$$
$$+ K\_11N \cdot (Achsposition(AN)/Achslänge(AN))] \cdot KFA1$$

$$(40)$$

$$\Delta A1M = (T_{BEZUG,M} - T_{BASIS,M}) \cdot [K\_M10 + K\_M11 \cdot KFA1 +$$
$$+ K\_M12 \cdot (Achsposition(A2)/Achslänge(A2)) + \ldots +$$
$$+ K\_M1N \cdot (Achsposition(AN)/Achslänge(AN))]$$

$$(40)$$

KFA1 = (Achsposition(A1) – (Achslänge(A1)/2))/(Achslänge(A1)/2)

(41)

Somit kann die erfindungsgemäße Kompensation einer temperaturabhängigen Verlagerung vorteilhaft auch für Strukturen verwendet werden, bei denen z. B. ein auf einem Maschinenbett verfahrbarer Kreuzschlitten für eine Achse verwendet wird.

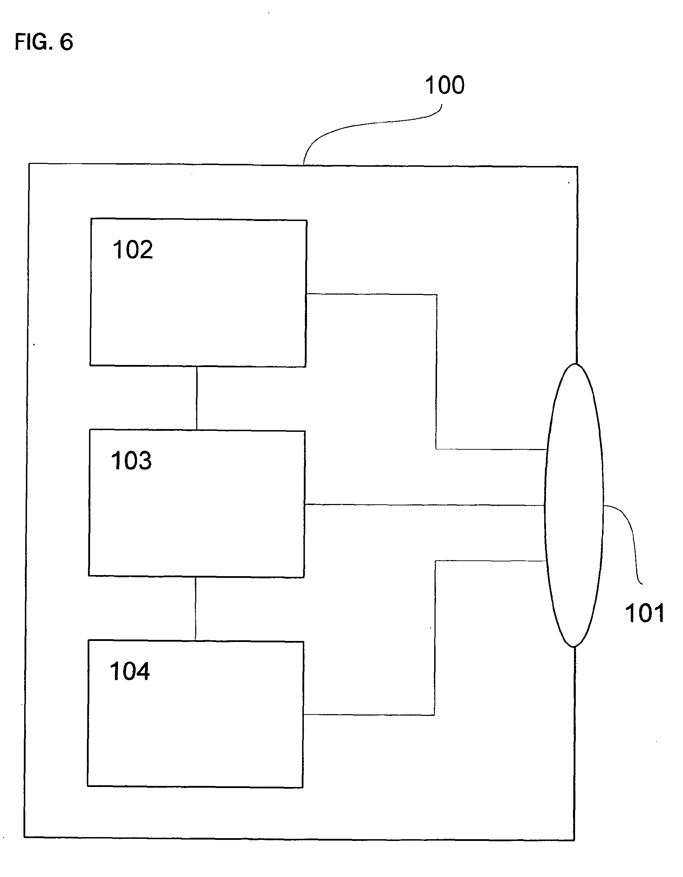

Fig. 6 zeigt schematisch eine Vorrichtung 100 zum Kompensieren einer temperaturabhängigen Lageveränderung an einer Werkzeugmaschine nach einem Ausführungsbeispiel der vorliegenden Erfindung. Die Vorrichtung 100 zum Kompensieren einer temperaturabhängigen Lageveränderung an einer Werkzeugmaschine mit einer oder mehreren Linearachsen umfasst eine Schnittstelle 101 zu einem oder mehreren Temperaturerfassungsmitteln zum Erfassen von Temperaturen an bestimmten Temperaturmesspositionen Linearachsen der Werkzeugmaschine und zu einer Maschinensteuereinrichtung der Werkzeugmaschine (z.B. der Maschinen- NC oder Maschinen- PLC) , ein Temperaturdifferenz- Ermittelungsmittel 102 zum Ermitteln einer ersten Temperaturdifferenz zwischen einer ersten Bezugstemperatur und der ersten Temperatur, ein Kompensationswert- Bestimmungsmittel 103 zum Bestimmen eines oder mehrerer Kompensationswerte in Abhängigkeit der von dem Temperaturdifferenz- Ermittelungsmittel 102 ermittelten Temperaturdifferenzen und einem Lageveränderungs- Kompensationsmittel 104 zum Kompensieren einer temperaturabhängigen Lageveränderung in Abhängigkeit der Kompensationswerte. Hierbei ist das Lageveränderungs- Kompensationsmittel 104 weiterhin dazu eingerichtet, einen oder mehrere der Kompensationswerte weiterhin in Abhängigkeit von einer oder mehrerer Achspositionen der Linearachsen zu bestimmen. Über die Schnittstelle können z.B. auch Achspositionen ausgelesen werden. Die Vorrichtung 100 ist z.B. dazu eingerichtet, eine Kompensation temperaturabhängiger Verlagerungen an einer Werkzeugmaschine nach einem oder mehreren der vorstehend beschriebenen Ausführungsbeispiele durchzuführen.

Zusammenfassend beschreibt die vorliegende Erfindung eine korrelative Kompensation der thermisch bedingten Verlagerungen am Werkzeug oder Werkstück von Werkzeugmaschinen, zu denen es durch die Verformungen der Gestellbauteile einer Werkzeugmaschine durch ungleichmäßige Erwärmung in Folge von einseitiger Wärmeeinbringung, z. B. durch Führungen und Antriebe oder auch andere Effekte kommt. Hierbei wird zur Bestimmung eines Kompensationswerts bevorzugt das Verhältnis von Achsposition zu Achslänge herangezogen, welches dazu benutzt wird, einen positionsabhängigen Anteil des Kompensationswerts zu berechnen. Hierbei wird dieser positionsabhängige Anteil bevorzugt auch für Richtungen senkrecht zur Bewegungsrichtung einer Linearachse bestimmt. Für Werkzeugmaschinen mit serieller Kinematik, bei denen mehrere Achsen seriell aufeinander aufbauen, wird bevorzugt das Verhältnis von Achsposition zu Achslänge aller Achsen herangezogen, um Anteile des Kompensationswertes für alle Raumrichtungen zu bestimmen. Die Kompensationswerte zur Kompensation der thermisch bedingten Verformungen durch die ungleichmäßigen Erwärmungen der Maschinengestellbauteile werden ggf. durch weitere Kompensationsanteile überlagert, z. B. auch zur Kompensation von Verlagerungen durch rotatorische Achsen, wie z. B. durch eine Motorspindel.

Die Berechnung der Kompensationswerte erfolgt bevorzugt mit einem möglichst schnellen Zeittakt, z. B. in der Kontrolleinheit, d. h. der Maschinen-NC, oder der Maschinen-PLC der Werkzeugmaschine. Die positionsabhängig berechneten Kompensationswerte werden dann bevorzugt durch die Maschinen-NC den jeweiligen Achs-Sollwerten der Achsen überlagert, bzw. die Achs-Sollwerte werden basierend auf den berechneten Kompensationswerten korrigiert.

Somit stellt die vorliegende Erfindung ein Verfahren bereit, bei dem eine Kompensation thermischer Verlagerungen an einer Werkzeugmaschine besser kompensiert werden kann als im Stand der Technik, da zusätzlich zu einer oder mehrerer Temperaturdifferenzen an Bauteilen einer oder mehrerer Achsen der Werkzeugmaschine zusätzlich eine oder mehrere Achspositionen der Achsen der Werkzeugmaschine in die Berechnung von Kompensationswerten mit eingehen und die Temperaturkompensation somit vorteilhaft positionsabhängig erfolgt.

**Patentansprüche**

1. Verfahren zum Kompensieren einer temperaturabhängigen Lageveränderung an einer Werkzeugmaschine mit einer Mehrzahl von seriell aufeinander aufbauenden Linearachsen (A1, A2) einschließlich zumindest einer ersten Linearachse (A1) und einer zweiten Linearachse (A2), wobei die zweite Linearachse (A2) auf der ersten Linearachse (A1) aufbaut, umfassend:

- Erfassen zumindest einer ersten Temperatur (Tyunten) an einer ersten Temperaturmessposition der ersten Linearachse (A1) und einer zweiten Temperatur (Tyoben) an einer zweiten Temperaturmessposition der ersten Linearachse (A1);

- Erfassen zumindest einer dritten Temperatur (Tzhinten) an einer dritten Temperaturmessposition der zweiten Linearachse (A2) und einer vierten Temperatur (Tzvorne) an einer vierten Temperaturmessposition der zweiten Linearachse (A2);
- Ermitteln einer ersten Temperaturdifferenz zwischen der ersten Temperatur (Tyunten) und der zweiten Temperatur (Tyoben);
- Ermitteln einer zweiten Temperaturdifferenz zwischen der dritten Temperatur (Tzhinten) und der vierten Temperatur (Tzvorne);
- Bestimmen eines ersten Kompensationswerts für die erste Linearachse (A1) in Abhängigkeit der ersten Temperaturdifferenz und der zweiten Temperaturdifferenz;
- Bestimmen eines zweiten Kompensationswerts für die zweite Linearachse (A2) in Abhängigkeit der ersten Temperaturdifferenz und der zweiten Temperaturdifferenz;
- Kompensieren einer temperaturabhängigen Lageveränderung der ersten Linearachse (A1) in Abhängigkeit des ersten Kompensationswerts; und
- Kompensieren einer temperaturabhängigen Lageveränderung der zweiten Linearachse (A2) in Abhängigkeit des zweiten Kompensationswerts;

wobei der erste Kompensationswert für die erste Linearachse (A1) zudem in Abhängigkeit eines ersten dimensionslosen Parameters und eines zweiten dimensionslosen Parameters bestimmt wird;

wobei der zweite Kompensationswert für die zweite Linearachse (A2) zudem in Abhängigkeit des ersten dimensionslosen Parameters und des zweiten dimensionslosen Parameters bestimmt wird;

wobei der erste dimensionslose Parameter dem Verhältnis von Achsposition der ersten Linearachse (A1) zu Achslänge der ersten Linearachse (A1) oder dem Quadrat des Verhältnisses von Achsposition der ersten Linearachse (A1) zu Achslänge der ersten Linearachse (A1) entspricht; und

wobei der zweite dimensionslose Parameter dem Verhältnis von Achsposition der zweiten Linearachse (A2) zu Achslänge der zweiten Linearachse (A2) oder dem Quadrat des Verhältnisses von Achsposition der zweiten Linearachse (A2) zu Achslänge der zweiten Linearachse (A2) entspricht.

2. Verfahren nach Anspruch 1, **dadurch gekennzeichnet, dass** der erste Kompensationswert einen positionsunabhängigen Anteil und einen positionsabhängigen Anteil, der zumindest von der Achsposition der ersten Linearachse (A1) abhängt, umfasst.

3. Verfahren nach Anspruch 1 oder 2, **dadurch gekennzeichnet, dass** bei dem Kompensieren einer temperaturabhängigen Lageveränderung in Abhängigkeit des ersten Kompensationswerts eine temperaturabhängige Lageveränderung in einer Richtung senkrecht zu der Richtung der ersten Linearachse (A1) kompensiert wird.

4. Verfahren nach zumindest einem der Ansprüche 1 bis 3, **dadurch gekennzeichnet, dass** bei dem Kompensieren einer temperaturabhängigen Lageveränderung in Abhängigkeit des ersten Kompensationswerts eine temperaturabhängige Lageveränderung in der Richtung der zweiten Linearachse (A2) der Werkzeugmaschine kompensiert wird.

5. Verfahren nach zumindest einem der Ansprüche 1 bis 4, **dadurch gekennzeichnet, dass** für jede der Mehrzahl von Linearachsen zumindest eine Temperatur an einer Temperaturmessposition der entsprechenden Linearachse ermittelt wird und eine jeweilige Temperaturdifferenz zwischen einer jeweiligen Bezugstemperatur und der jeweiligen ermittelten Temperatur ermittelt wird, und für jede der Linearachsen ein Kompensationsgesamtwert bestimmt wird, der einer Summe aus Kompensationswerten entspricht, deren Anzahl gleich der Anzahl der seriell aufeinander aufbauenden Linearachsen ist, wobei jeder einzelne Kompensationswert direkt proportional zu genau einer der Temperaturdifferenzen ist.

6. Verfahren nach Anspruch 5, **dadurch gekennzeichnet, dass** jeder einzelne Kompensationswert in Abhängigkeit einer Summe aus positionsabhängigen Termen gebildet wird, wobei jeder positionsabhängige Term von der Achsposition einer der Linearachsen abhängt.

7. Verfahren nach zumindest einem der Ansprüche 1 bis 6, **dadurch gekennzeichnet, dass** die erste Linearachse (A1) ein auf einem Maschinenbett verfahrbarer Schlitten ist, wobei im Schritt Bestimmen des ersten Kompensationswerts weiterhin ein Faktor

$$(AP1 - AL1/2)/(AL1/2)$$

eingeht, wobei AP1 die Achsposition der ersten Linearachse (A1) angibt und AL1 die Achslänge der ersten Linearachse (A1) angibt.

8. Vorrichtung zum Kompensieren einer temperaturabhängigen Lageveränderung an einer Werkzeugmaschine mit einer Mehrzahl von seriell aufeinander aufbauenden Linearachsen (A1, A2) einschließlich zumindest einer ersten Linearachse (A1) und einer zweiten Linearachse (A2), wobei die zweite Linearachse (A2) auf der ersten Linearachse (A1) aufbaut, gemäß einem Verfahren nach zumindest einem der Ansprüche 1 bis 7, mit:

- einer Mehrzahl von Temperaturerfassungsmitteln zum Erfassen zumindest der ersten Temperatur (Tyunten) an der ersten Temperaturmessposition der ersten Linearachse (A1) und der zweiten Temperatur (Tyoben) an der zweiten Temperaturmessposition der ersten Linearachse (A1), und zum Erfassen zumindest der dritten Temperatur (Tzhinten) an der dritten Temperaturmessposition der zweiten Linearachse (A2) und der vierten Temperatur (Tzvorne) an der vierten Temperaturmessposition der zweiten Linearachse (A2);
- einem Temperaturdifferenz-Ermittelungsmittel (102) zum Ermitteln der ersten Temperaturdifferenz und der zweiten Temperaturdifferenz;
- einem Kompensationswert-Bestimmungsmittel (103) zum Bestimmen des ersten Kompensationswerts und des zweiten Kompensationswerts; und
- einem Lageveränderungs-Kompensationsmittel (104) zum Kompensieren einer temperaturabhängigen Lageveränderung der ersten Linearachse (A1) in Abhängigkeit des ersten Kompensationswerts und zum Kompensieren einer temperaturabhängigen Lageveränderung der zweiten Linearachse (A2) in Abhängigkeit des zweiten Kompensationswerts;

wobei der zweite Kompensationswert für die zweite Linearachse (A2) zudem in Abhängigkeit des ersten dimensionslosen Parameters und des zweiten dimensionslosen Parameters bestimmt wird;
wobei der erste dimensionslose Parameter dem Verhältnis von Achsposition der ersten Linearachse (A1) zu Achslänge der ersten Linearachse (A1) oder dem Quadrat des Verhältnisses von Achsposition der ersten Linearachse (A1) zu Achslänge der ersten Linearachse (A1) entspricht; und
wobei der zweite dimensionslose Parameter dem Verhältnis von Achsposition der zweiten Linearachse (A2) zu Achslänge der zweiten Linearachse (A2) oder dem Quadrat des Verhältnisses von Achsposition der zweiten Linearachse (A2) zu Achslänge der zweiten Linearachse (A2) entspricht.

9. System mit einer Werkzeugmaschine mit einer Mehrzahl von seriell aufeinander aufbauenden Linearachsen (A1, A2) einschließlich zumindest einer ersten Linearachse (A1) und einer zweiten Linearachse (A2), wobei die zweite Linearachse (A2) auf der ersten Linearachse (A1) aufbaut, und einer Vorrichtung nach Anspruch 8 zum Kompensieren einer temperaturabhängigen Lageveränderung an der Werkzeugmaschine gemäß einem Verfahren nach zumindest einem der Ansprüche 1 bis 7.

**Claims**

1. A method for compensating a temperature-dependent change of position on a machine tool having a plurality of linear axes (A1, A2) serially based upon each other and including at least one first linear axis (A1) and a second linear axis (A2), the second linear axis (A2) being based on the first linear axis (A1), comprising:

- detecting at least one first temperature (Tyunten) at a first temperature measuring position of the first linear axis (A1) and a second temperature (Tyoben) at a second temperature measuring position of the first linear axis (A1);
- detecting at least one third temperature (Tzhinten) at a third temperature measuring position of the second linear axis (A2) and a fourth temperature (Tzvorne) at a fourth temperature measuring position of the second linear axis (A2);
- obtaining a first difference in temperature between the first temperature (Tyunten) and the second temperature (Tyoben);
- obtaining a second difference in temperature between the third temperature (Tzhinten) and the fourth temperature (Tzvorne);

- determining a first compensation value for the first linear axis (A1) in dependence of the first difference in temperature and the second difference in temperature;
- determining a second compensation value for the second linear axis (A2) in dependence of the first difference in temperature and the second difference in temperature;
- compensating a temperature-dependent change of position of the first linear axis (A1) in dependence of the first compensation value; and
- compensating a temperature-dependent change of position of the second linear axis (A2) in dependence of the second compensation value;

wherein the first compensation value for the first linear axis (A1) is moreover determined in dependence of a first dimension-less parameter and a second dimension-less parameter;

wherein the second compensation value for the second linear axis (A2) is moreover determined in dependence of the first dimension-less parameter and the second dimension-less parameter;

wherein the first dimension-less parameter corresponds to the ratio of the axis position of the first linear axis (A1) to the axis length of the first linear axis (A1) or to the square of the ratio of the axis position of the first linear axis (A1) to the axis length of the first linear axis (A1); and

wherein the second dimension-less parameter corresponds to the ratio of the axis position of the second linear axis (A2) to the axis length of the second linear axis (A2) or to the square of the ratio of the axis position of the second linear axis (A2) to the axis length of the second linear axis (A2).

2. The method according to claim 1, **characterized in that** the first compensation value comprises a position-independent portion and a position-dependent portion depending at least on the axis position of the first linear axis (A1).

3. The method according to claim 1 or 2, **characterized in that** during the compensating of a temperature-dependent change of position in dependence of the first compensation value a temperature-dependent change of position is compensated in a direction perpendicular to a direction of the first linear axis (A1).

4. The method according to at least one of claims 1 to 3, **characterized in that** during the compensating of a temperature-dependent change of position in dependence of the first compensation value a temperature-dependent change of position is compensated in a direction of the second linear axis (A2) of the machine tool.

5. The method according to at least one of claims 1 to 4, **characterized in that** for each of the plurality of linear axes at least one temperature is obtained at a temperature measuring position of the corresponding linear axis and a respective difference in temperature is obtained between a respective reference temperature and the respective obtained temperature, and for each of the linear axes a compensation total value is determined which corresponds to a sum of compensation values the number of which is equal to the number of the linear axes serially based upon each other wherein each individual compensation value is directly proportional to exactly one of the differences in temperature.

6. The method according to claim 5, **characterized in that** each individual compensation value is formed in dependence of a sum of position-dependent terms, each position-dependent term depending on the axis position of one of the linear axes.

7. The method according to at least one of claims 1 to 6, **characterized in that** the first linear axis (A1) is a slide displaceable on a machine bed, wherein in the step of determining the first compensation value a factor

$$(AP1 - AL1/2)/(AL1/2)$$

is further taken into account wherein AP1 is the axis position of the first linear axis (A1) and AL1 is the axis length of the first linear axis (A1).

8. A device for compensating a temperature-dependent change of position on a machine tool having a plurality of linear axes (A1, A2) serially based upon each other and including at least one first linear axis (A1) and a second linear axis (A2), wherein the second linear axis (A2) is based on the first linear axis (A1), in accordance with a method according to at least one of claims 1 to 7, comprising:

- a plurality of temperature detecting means for detecting at least the first temperature (Tyunten) at the first temperature measuring position of the first linear axis (A1) and the second temperature (Tyoben) at the second temperature measuring position of the first linear axis (A1), and for detecting at least the third temperature (Tzhinten) at the third temperature measuring position of the second linear axis (A2) and the fourth temperature (Tzvorne) at the fourth temperature measuring position of the second linear axis (A2);
- a temperature difference obtainer (102) for obtaining the first difference in temperature and the second difference in temperature;
- a compensation value determiner (103) for determining the first compensation value and the second compensation value; and
- a change of position compensator (104) for compensating a temperature-dependent change of position of the first linear axis (A1) in dependence of the first compensation value, and for compensating a temperature-dependent change of position of the second linear axis (A2) in dependence of the second compensation value;

wherein the second compensation value for the second linear axis (A2) is moreover determined in dependence of the first dimension-less parameter and the second dimension-less parameter;
wherein the first dimension-less parameter corresponds to the ratio of the axis position of the first linear axis (A1) to the axis length of the first linear axis (A1) or to the square of the ratio of the axis position of the first linear axis (A1) to the axis length of the first linear axis (A1); and
wherein the second dimension-less parameter corresponds to the ratio of the axis position of the second linear axis (A2) to the axis length of the second linear axis (A2) or to the square of the ratio of the axis position of the second linear axis (A2) to the axis length of the second linear axis (A2).

9. A system comprising a machine tool having a plurality of linear axes (A1, A2) serially based upon each other and including at least one first linear axis (A1) and a second linear axis (A2), the second linear axis (A2) being based upon the first linear axis (A1), and a device according to claim 8 for compensating a temperature-dependent change of position on the machine tool in accordance with a method according to at least one of claims 1 to 7.

**Revendications**

1. Procédé de compensation d'une modification de la position en fonction de la température sur une machine-outil, comportant une pluralité d'axes linéaires (A1, A2) disposés en série les uns par rapport aux autres, y compris au moins un premier axe linéaire (A1) et un second axe linéaire (A2), le second axe linéaire (A2) étant disposé par rapport au premier axe linéaire (A1), comprenant :

- la détection d'au moins une première température (Tyunten) à une première position de mesure de température du premier axe linéaire (A1) et d'une seconde température (Tyoben) à une seconde position de mesure de température du premier axe linéaire (A1) ;
- la détection d'au moins une troisième température (Tzhinten) à une troisième position de mesure de température du second axe linéaire (A2) et d'une quatrième température (Tzvorne) à une quatrième position de mesure de température du second axe linéaire (A2) ;
- la détermination d'une première différence de température entre la première température (Tyunten) et la seconde température (Tyoben) ;
- la détermination d'une seconde différence de température entre la troisième température (Tzhinten) et la quatrième température (Tzvorne) ;
- la définition d'une première valeur de compensation pour le premier axe linéaire (A1) en fonction de la première différence de température et de la seconde différence de température ;
- la définition d'une seconde valeur de compensation pour le second axe linéaire (A2) en fonction de la première différence de température et de la seconde différence de température ;
- la compensation d'une modification de la position en fonction de la température du premier axe linéaire (A1) selon la première valeur de compensation ; et
- la compensation d'une modification de la position en fonction de la température du second axe linéaire (A2) selon la seconde valeur de compensation ;

dans lequel
la première valeur de compensation pour le premier axe linéaire (A1) est définie en outre en fonction d'un première paramètre adimensionnel et d'un second paramètre adimensionnel ;

la seconde valeur de compensation pour le second axe linéaire (A2) est définie en outre en fonction d'un premier paramètre adimensionnel et du second paramètre adimensionnel ;

le premier paramètre adimensionnel correspond au ratio de la position du premier axe linéaire (A1) par rapport à la longueur du premier axe linéaire (A1) ou au carré du ratio de la position du premier axe linéaire (A1) par rapport à la longueur du premier axe linéaire (A1) ; et

le second paramètre adimensionnel correspond au ratio de la position du second axe linéaire (A2) par rapport à la longueur du second axe linéaire (A2) ou au carré du ratio de la position du second axe linéaire (A2) par rapport à la longueur du second axe linéaire (A2).

2. Procédé selon la revendication 1, **caractérisé en ce que** la première valeur de compensation comprend une part indépendante de la position et une part dépendante de la position qui dépend au moins de la position du premier axe linéaire (A1).

3. Procédé selon la revendication 1 ou 2, **caractérisé en ce que** lors de la compensation d'une modification de la position en fonction de la température selon la première valeur de compensation, une modification de la position en fonction de la température est compensée dans une direction perpendiculaire à la direction du premier axe linéaire (A1).

4. Procédé selon l'une des revendications 1 à 3, **caractérisé en ce que** lors de la compensation d'une modification de la position en fonction de la température selon la première valeur de compensation, une modification de la position en fonction de la température est compensée dans la direction du second axe linéaire (A2) de la machine-outil.

5. Procédé selon l'une au moins des revendications 1 à 4, **caractérisé en ce que** pour chacun parmi la pluralité d'axes linéaires, on détermine au moins une température à une position de mesure de température de l'axe linéaire correspondant, et on détermine respectivement une différence de température entre une température de référence respective et la température déterminée respective, et

pour chacun des axes linéaires, on détermine une valeur totale de compensation qui correspond à une somme de valeurs de compensation dont le nombre est égal au nombre des axes linéaires disposés en série les uns par rapport aux autres, chaque valeur de compensation individuelle étant directement proportionnelle à précisément l'une des différences de températures.

6. Procédé selon la revendication 5, **caractérisé en ce que** chaque valeur de compensation individuelle est formée en fonction d'une somme de termes dépendants de la position, et chaque terme dépendant de la position dépend de la position de l'un des axes linéaires.

7. Procédé selon l'une au moins des revendications 1 à 6, **caractérisé en ce que** le premier axe linéaire (A1) est un chariot mobile sur un banc de machine, l'étape de la définition d'une première valeur de compensation incluant en outre un facteur

$$(AP1 - AL1/2) \, / \, (AL1/2)$$

où AP1 indique la position du premier axe linéaire (A1) et AL1 indique la longueur du premier axe linéaire (A1).

8. Dispositif de compensation d'une modification de la position en fonction de la température sur une machine-outil, comportant une pluralité d'axes linéaires (A1, A2) disposés en série les uns par rapport aux autres, y compris au moins un premier axe linéaire (A1) et un second axe linéaire (A2), le second axe linéaire (A2) étant disposé par rapport au premier axe linéaire (A1), par un procédé selon l'une au moins des revendications 1 à 7, comprenant :

- une pluralité de moyens de détection de température destinés à détecter au moins ladite première température (Tyunten) à la première position de mesure de température du premier axe linéaire (A1) et ladite seconde température (Tyoben) à la seconde position de mesure de température du premier axe linéaire (A1), et à détecter au moins ladite troisième température (Tzhinten) à la troisième position de mesure de température du second axe linéaire (A2) et ladite quatrième température (Tzvorne) à ladite quatrième position de mesure de température du second axe linéaire (A2) ;

- un moyen de détermination de la différence de température (102) destiné à déterminer la première différence de température et la seconde différence de température ;
- un moyen de définition de la valeur de compensation (103) destiné à définir la première valeur de compensation et la seconde valeur de compensation ; et
- un moyen de compensation de la modification de position (104) destiné à compenser une modification de la position en fonction de la température du premier axe linéaire (A1) selon la première valeur de compensation, et à compenser une modification de la position en fonction de la température du second axe linéaire (A2) selon la seconde valeur de compensation ;

dans lequel

la seconde valeur de compensation pour le second axe linéaire (A2) est définie en outre en fonction du premier paramètre adimensionnel et du second paramètre adimensionnel ;

le premier paramètre adimensionnel correspond au ratio de la position du premier axe linéaire (A1) par rapport à la longueur du premier axe linéaire (A1) ou au carré du ratio de la position du premier axe linéaire (A1) par rapport à la longueur du premier axe linéaire (A1) ; et

le second paramètre adimensionnel correspond au ratio de la position du second axe linéaire (A2) par rapport à la longueur du second axe linéaire (A2) ou au carré du ratio de la position du second axe linéaire (A2) par rapport à la longueur du second axe linéaire (A2).

9. Système pourvu d'une machine-outil comportant une pluralité d'axes linéaires (A1, A2) disposés en série les uns par rapport aux autres, y compris au moins un premier axe linéaire (A1) et un second axe linéaire (A2), le second axe linéaire (A2) étant disposé par rapport au premier axe linéaire (A1), et comportant un dispositif selon la revendication 8 pour compenser une modification de la position en fonction de la température sur une machine-outil par un procédé selon l'une au moins des revendications 1 à 7.

FIG. 1

$$\Delta H = \alpha \times H \times \Delta T$$

$$\Delta L = \alpha \times L \times \Delta T$$

Achse 1

S1'

S1

L

B

EP 2 378 381 B1

## FIG. 2

$\Delta Toben$

$L\_oben = \alpha \times L \times \Delta Toben + L$

R

L

$\Delta H = \alpha \times L \times \Delta T$

S1

S1'

$L\_unten = \alpha \times L \times \Delta Tunten + L$

$\Delta Tunten$

FIG. 3

FIG. 4A

FIG. 4B

S2'

S2

Tzhinten

Tzvorne

Achse_1

Achse_2

Tyoben

S1''   S1   S1'

Tyunten

W

W

S2''

W

S2

Tzhinten

Tzvorne

S2''

Tyoben

S1''   S1   S1'

Tyunten

S2''

W

W

W

EP 2 378 381 B1

EP 2 378 381 B1

FIG. 5

FIG. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19800033 A1
- DE 102004044838 A1
- US 2006218811 A1
- EP 0625739 A1
- DE 10312025 A1
- DE 102007045592 A1

**In der Beschreibung aufgeführte Nicht-Patentliteratur**

- **JIE ZHU.** *Robust Thermal Error Modeling and Compensation for CNC Machine Tools,* 01. Januar 2008
- **P. SCHELLEKENS et al.** *Development of methods for numerical error correction of machine tools,* 01. Januar 1993
- **S. YANG et al.** *Accuracy Enhancement of a Horizontal Machining Center by Real-Time Error compensation,* 01. Januar 1996
- **J. S. CHEN et al.** *Real-Time Compensation for Time-Variant Volumetric Errors on a Machining Center,* 01. November 1993
- *Transactions of the American Society of Mechanical Engineers, Series B: Journal of Engineering for Industry, ASME,* vol. 115 (4), ISSN 0022-0817